# EUROPEAN PATENT APPLICATION

(11) **EP 4 760 815 A1**
(43) Date of publication of application: **17.06.2026**
(21) Application number: 25219156.4
(22) Date of filing: 27.11.2025
(51) Int. Cl.: H01M 4/525, H01M 4/62, H01M 4/04

(54) **POSITIVE ELECTRODE AND METHOD FOR MANUFACTURING THE SAME**

(30) Priority: 11.12.2024 KR 20240183796
(71) Applicant: SAMSUNG SDI CO., LTD., Yongin-si, Gyeonggi-do 17084 (KR)
(72) Inventor: HWANG, Hoseong, Yongin-siYongin Yongin-si (KR); CHA, Minah, 17084 Yongin-si (KR); KIM, Teayeop, 17084 Yongin-si (KR); LEE, Jongjin, 17084 Yongin-si (KR); KIM, JinYoung, 17084 Yongin-si (KR)
(74) Representative: Marks & Clerk LLP

(57) **Abstract**

A positive electrode and a method for manufacturing a positive electrode are provided. The method for manufacturing a positive electrode includes: forming a positive electrode active material including a carbon coating layer, and an aggregate; forming a slurry including the positive electrode active material and the aggregate; and coating the slurry on a current collector and drying to form a positive electrode active material layer, wherein the carbon coating layer and the aggregate are formed from graphene particles, and wherein the graphene particles are in at least one of a flake form or a cabbage-like form.

## Description

### BACKGROUND

### 1. Field

The present invention relates to a positive electrode and a method for manufacturing the same.

### 2. Description of the Related Art

Recently, with the rapid proliferation of battery-powered electronic devices (such as mobile phones and/or notebook computers) and/or electric vehicles, the demand for rechargeable batteries with high energy density and large capacity has been increasing significantly. In response, extensive research and development efforts have been made to enhance the performance of such rechargeable batteries, particularly rechargeable lithium batteries.

A rechargeable lithium battery generally includes a positive electrode, a negative electrode, and an electrolyte. Each of the positive electrode and the negative electrode contains an active material that is capable of lithium-ion intercalation and deintercalation. Electrical energy is generated through oxidation and reduction reactions as lithium ions move between the electrodes during charging and discharging. For example, electrical energy is generated when lithium ions are intercalated into the positive electrode and/or deintercalated from the negative electrode during the discharge process.

### SUMMARY

One or more aspects of the present invention are directed toward a positive electrode having (with) low resistance and a method for manufacturing the same. Additional aspects will be set forth in part in the description which follows and, in part, will be apparent from the description, or may be learned by practice of the presented embodiments of the disclosure.

According to a first aspect of the present invention there is provided a method for manufacturing a positive electrode including: forming a positive electrode active material (e.g., in a form of particles) including a carbon coating layer, and an aggregate; forming a slurry including the positive electrode active material and the aggregate; and coating the slurry on a current collector and drying to form a positive electrode active material layer, wherein the carbon coating layer and the aggregate are each formed from graphene particles, and wherein a form of the graphene particles includes at least one of a flake form or a cabbage-like form.

According to a second aspect of the present invention there is provided a method for manufacturing a positive electrode including: forming a first slurry containing a first positive electrode active material (e.g., in a form of particles) containing a first carbon coating layer, and a first aggregate; forming a second slurry containing a second positive electrode active material (e.g., in a form of particles) containing a second carbon coating layer, and a second aggregate; coating the first slurry on a current collector and drying to form a first positive electrode active material layer; and coating the second slurry on the first positive electrode active material layer and drying to form a second positive electrode active material layer, wherein the first carbon coating layer and the first aggregate are each formed from first graphene particles, and the second carbon coating layer and the second aggregate are each formed from second graphene particles.

According to a third aspect of the present invention there is provided a positive electrode including a current collector and a positive electrode active material layer on the current collector, wherein the positive electrode active material layer includes: a positive electrode active material (e.g., in a form of particles) containing a lithium nickel-based composite oxide and a carbon coating layer; an aggregate; a conductive material containing a carbon-based material having a one-dimensional nanostructure; and a binder, wherein the carbon coating layer and the aggregate are each formed from graphene particles.

At least some of the above and other features of the invention are set out in the claims.

### BRIEF DESCRIPTION OF DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 is a schematic conceptual diagram of a rechargeable lithium battery according to one or more embodiments of the present disclosure.
FIGS. 2 to 5 are each schematic views of a rechargeable lithium battery according to one or more embodiments of the present disclosure.
FIG. 6 is a cross-sectional view of a positive electrode according to one or more embodiments of the present disclosure.
FIG. 7 is an enlarged view of the positive electrode of FIG. 6.
FIG. 8 is a cross-sectional view schematically illustrating a large particle of a positive electrode active material according to one or more embodiments of the present disclosure.
FIG. 9 is a cross-sectional view schematically illustrating a small particle of a positive electrode active material according to one or more embodiments of the present disclosure.
FIG. 10 is a graph showing the distribution of carbon in the third direction in the positive electrode active material layer of FIG. 6.
FIG. 11 is a cross-sectional view of a positive electrode according to one or more embodiments of the present disclosure.
FIGS. 12 to 15 are enlarged views of the positive electrode of FIG. 11.
FIG. 16 is a graph showing the distribution of carbon in the third direction in the positive electrode active material layer of FIG. 11.
FIG. 17 is a flowchart for describing a method for manufacturing a positive electrode according to one or more embodiments of the present disclosure.
FIG. 18 to FIG. 21 are schematic diagrams for describing steps (e.g., acts or tasks) of a method for manufacturing a positive electrode according to one or more embodiments of the present disclosure.
FIG. 22 is a scanning electron microscope (SEM) image of reduced graphene oxide particles (RGO) in the form of flakes according to Preparation Example 1 of the present disclosure.
FIG. 23 are scanning electron microscope (SEM) images of the first positive electrode active material AM1 and the aggregate GAG1 according to Preparation Example 1 of the present disclosure at different magnifications.
FIG. 24 is a scanning electron microscope (SEM) image of reduced graphene oxide particles (RGO) having cabbage-like morphology according to Preparation Example 2 of the present disclosure.
FIG. 25 are scanning electron microscope (SEM) images of the second positive electrode active material AM2 and the aggregate GAG2 according to Preparation Example 2 of the present disclosure at different magnifications.
FIG. 26 is a scanning electron microscope (SEM) image of a cross-section of a positive electrode according to Example 1 of the present disclosure.
FIG. 27 is a scanning electron microscope (SEM) image of a cross-section of a positive electrode according to Example 3 of the present disclosure.
FIG. 28 is a scanning electron microscope (SEM) image of a cross-section of a positive electrode according to Comparative Example 1 of the present disclosure.

### DETAILED DESCRIPTION

To fully understand the configuration and effects of the present disclosure, one or more example embodiments will be described with reference to the accompanying drawings. However, the present disclosure is not limited to the following example embodiments and may be implemented in one or more suitable forms. The example embodiments are provided solely to illustrate the present disclosure and to enable those skilled in the art to fully understand its scope.

In this disclosure, if (e.g., when) an element is described as being "on" another element, it may be directly on the other element, or one or more intervening elements may be present therebetween. In contrast, if (e.g., when) an element is referred to as being "directly on" another element, there are no intervening elements present therebetween. In the drawings, certain thicknesses may be exaggerated to better illustrate technical details. Throughout the disclosure, like reference numerals indicate like elements, and duplicative descriptions thereof may not be provided for conciseness.

One or more embodiments described herein may be illustrated using sectional and/or plan views, which are presented as idealized and illustrative examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe one or more suitable elements, these terms are merely used for distinction and do not imply any particular order or hierarchy. For example, a first element discussed herein could be termed a second element, without departing from the scope of the disclosure. The embodiments described and illustrated herein may include complementary variations.

The terms used in this disclosure serve only to explain one or more suitable embodiments and are not intended to limit the present disclosure. Unless explicitly stated otherwise, singular forms may also include plural forms. For example, the singular forms "a," "an," and "the" are intended to include the plural forms as well, unless the context clearly indicates otherwise. The terms " comprise(s)/include(s)" and/or " comprising/including" and/or "has(have)/having" do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the phrase "combination thereof" may refer to a mixture, a stack, a composite, a copolymer, an alloy, a blend, or a reaction product of constituents.

Unless otherwise specifically defined, the term "particle diameter" or "particle size" refers to an average particle diameter/size. The particle diameter/size may represent the median particle size (D50), which corresponds to the diameter/size of particles at 50 vol% in a cumulative particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter/size (D50) may be measured using widely suitable methods, such as a particle size analyzer, for example, HORIBA, LA-950 laser particle size analyzer, or by using transmission electron microscope (TEM) imaging, or scanning electron microscope (SEM) imaging. In one or more embodiments, dynamic light scattering (DLS) may be used, where particle counts within size ranges are analyzed to calculate the average particle diameter/size (D50). In one or more embodiments, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution. In the present disclosure, when particles are spherical, "diameter/size" indicates an average particle diameter/size, and when the particles are non-spherical, the "diameter/size" indicates an average major axis length of particles.

In this disclosure, the term "single particle" may refer to one particle that exists alone without a grain boundary therein. In terms of morphology, the single particle may refer to one particle, a monolith structure, a single unitary structure, or a non-aggregated (e.g., non-agglomerated) particle, existing as an independent phase in which particles do not aggregate with each other. For example, the single particle may be a single crystal. In one or more embodiments, the single particle may be or include a particle containing a few crystals. The single particle may be independently separated. In one or more embodiments, the single particle may exist in a form in which less than 10 single particles are attached to one another.

In the disclosure, the phrases "A or B," "A and/or B," "A/B," "at least one of A and B," "at least one of A or B," "A, B, or C," "at least one of A, B, and C," and "at least one of A, B, or C" include any one or all possible combinations of the listed elements.

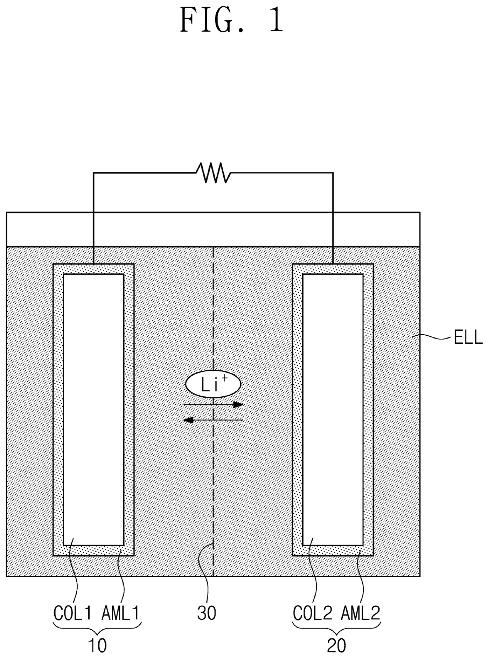

FIG. 1 is a schematic conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery includes a current collector COL1 and a positive electrode active material layer AML1 on the current collector COL1. The positive electrode active material layer AML1 includes a positive electrode active material (e.g., in a form of particles), a binder and a conductive material (e.g., an electrically conductive material).

In one or more embodiments, the positive electrode 10 may further include an additive that may serve as a sacrificial positive electrode.

An amount of the positive electrode active material may be about 90 wt% to about 99 wt% based on a total weight of 100 wt% of the positive electrode active material layer AML1. Amounts of the binder and the conductive material may each be about 0.5 wt% to about 5 wt% based on the total weight of 100 wt% of the positive electrode active material layer AML1.

The binder serves to attach the positive electrode active material particles well to each other and also to attach the positive electrode active material well to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material (e.g., an electrically conductive material) may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; or a mixture thereof.

In one or more embodiments, aluminium (Al) may be used as the current collector COL1, but embodiments of the present disclosure are not limited thereto.

### Positive Electrode Active Material

The positive electrode active material includes a compound (lithiated intercalation compound) that is capable of intercalating and deintercalating lithium. For example, in one or more embodiments, at least one of a composite oxide of lithium and a metal selected from among cobalt, manganese, nickel, and a combination thereof may be used.

The composite oxide may be a lithium transition metal composite oxide. Non-limiting examples of the composite oxide may include lithium nickel-based oxides, lithium cobalt-based oxides, lithium manganese-based oxides, lithium iron phosphate-based compounds, cobalt-free nickel-manganese-based oxides, and/or a combination thereof.

In one or more embodiments, one or more compounds represented by any one selected from among the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing Chemical Formulas, A may be nickel (Ni), cobalt (Co), manganese (Mn), or a combination thereof; X may be Al, Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and L¹ may be Mn, Al, or a combination thereof.

In one or more embodiments, the positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium in the lithium transition metal composite oxide. The high-nickel-based positive electrode active material may be capable of realizing high capacity and may be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles), and may further include a binder and/or a conductive material (e.g., an electrically conductive material).

For example, in one or more embodiments, the negative electrode active material layer AML2 may include about 90 wt% to about 99.5 wt% of the negative electrode active material, about 0.5 wt% to about 5 wt% of the binder, and about 0 wt% to about 5 wt% of the conductive material, based on a total weight of 100 wt% of the negative electrode active material layer.

The binder may serve to attach the negative electrode active material particles well to each other and also to attach the negative electrode active material well to the current collector COL2. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the binder of the negative binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material (e.g., electrically conductive material or electron conductor) may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a mixture thereof.

The negative current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material AML2 may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnOₖ (0<k≤2) (e.g., SnO₂), a Sn-based alloy, or a combination thereof.

The silicon-carbon composite (e.g., in a form of particles) may be a composite of silicon and amorphous carbon. According to one or more embodiment, the silicon-carbon composite may be in a form of silicon particles and amorphous carbon coated on a surface of the silicon particles. For example, in one or more embodiments, the silicon-carbon composite may include a secondary particle (core) in which primary silicon particles are assembled, and an amorphous carbon coating layer (shell) on a surface of the secondary particle. The amorphous carbon may also be between the primary silicon particles, and, for example, the primary silicon particles may be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core.

In one or more embodiments, the Si-based negative electrode active material and/or the Sn-based negative electrode active material may be used in combination with a carbon-based negative electrode active material.

### Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, or a combination thereof on one or both (e.g., simultaneously) surfaces (e.g., two opposite surfaces) of the porous substrate.

The porous substrate may be a polymer film formed of any one selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto.

In one or more embodiments, the organic material and the inorganic material may be mixed in one coating layer, or a coating layer including an organic material and a coating layer including an inorganic material may be stacked.

### Electrolyte ELL

The electrolyte solution ELL for a rechargeable lithium battery may include a non-aqueous organic solvent and a lithium salt.

The non-aqueous organic solvent may serve as a medium for transmitting ions taking part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvents may be used alone or in combination of two or more thereof.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation of the lithium ions between the positive electrode and negative electrode. Non-limiting examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

The rechargeable lithium battery may be classified into a cylindrical, prismatic, pouch, or coin-type (kind) battery, and/or the like depending on its shape.

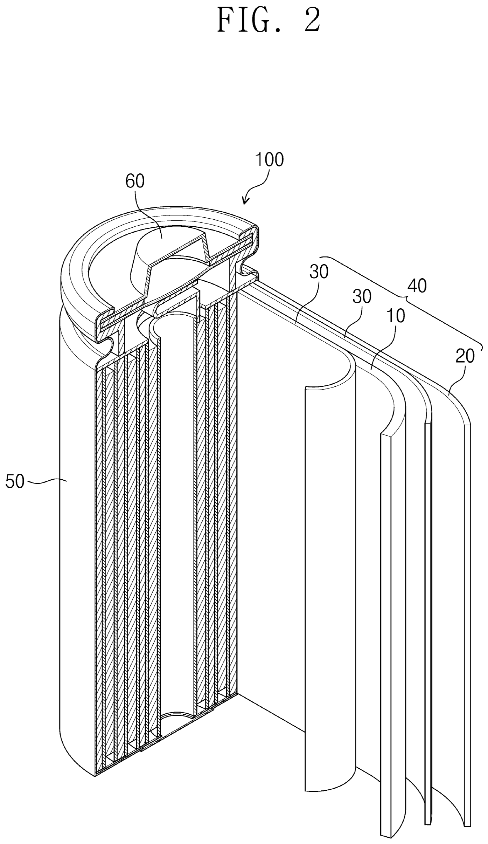

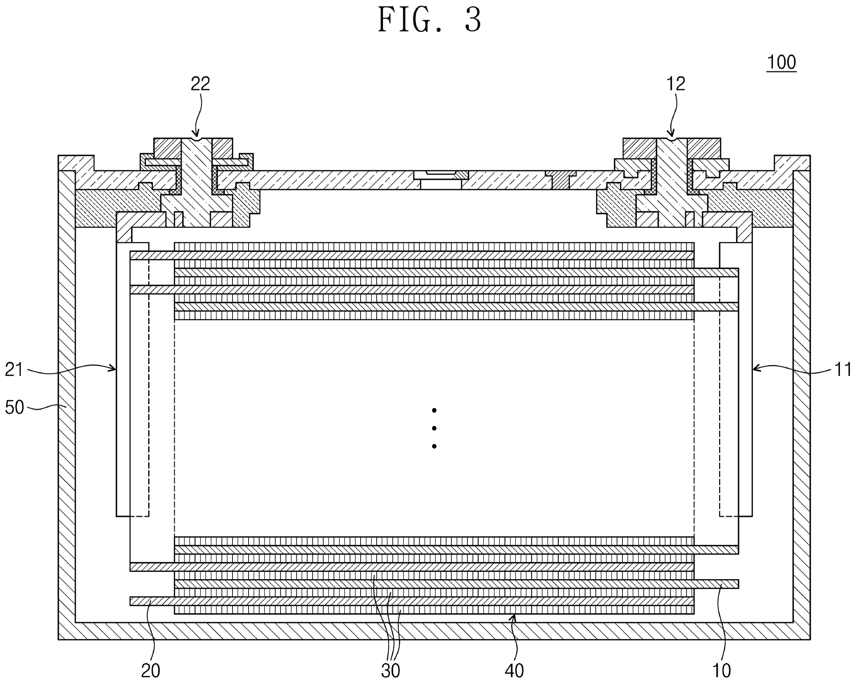

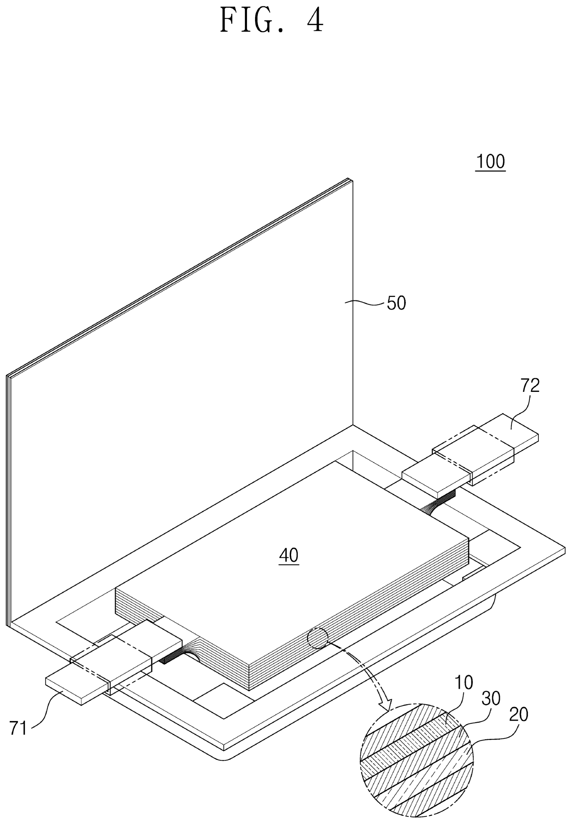

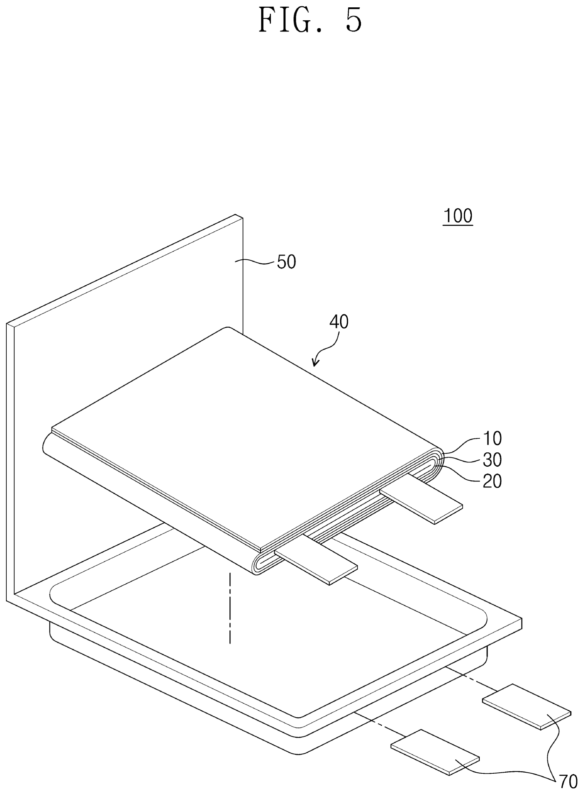

FIGS. 2 to 5 are schematic views each illustrating a rechargeable lithium battery according to one or more embodiments of the present disclosure. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 2. In one or more embodiments, as shown in FIG. 3, the rechargeable lithium battery 100 may include a positive lead tab 11, a positive terminal 12, a negative lead tab 21, and a negative terminal 22. In one or more embodiments, as shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

Hereinafter, the positive electrode 10 of the present disclosure will be described in more detail.

### Positive electrode 10

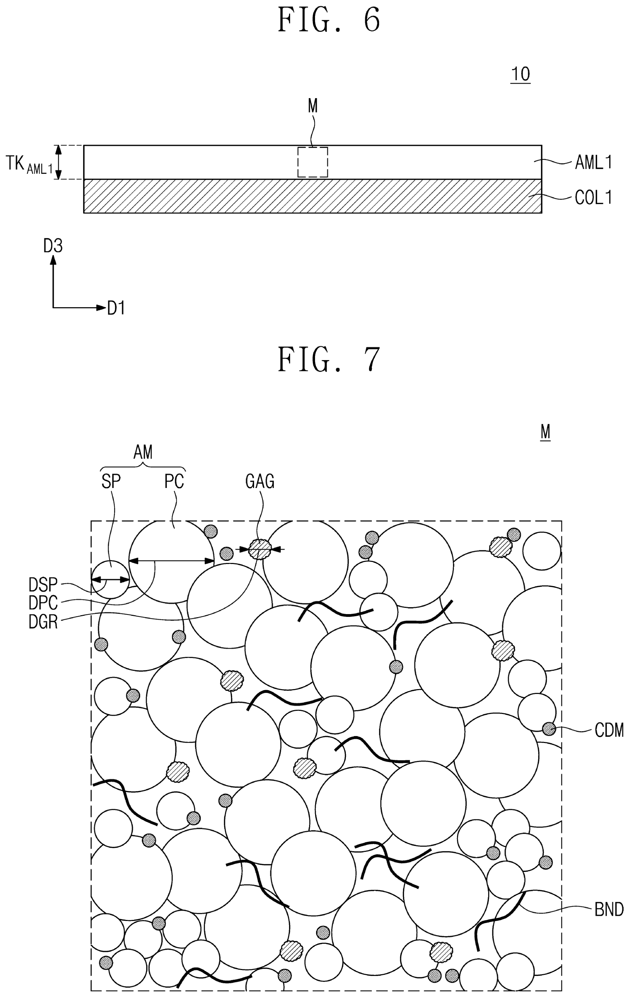

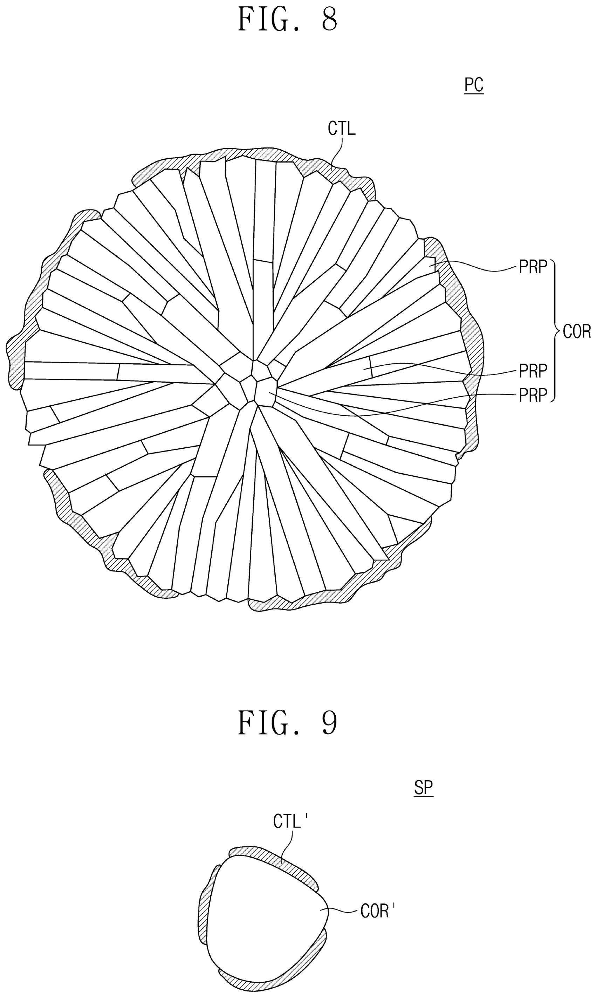

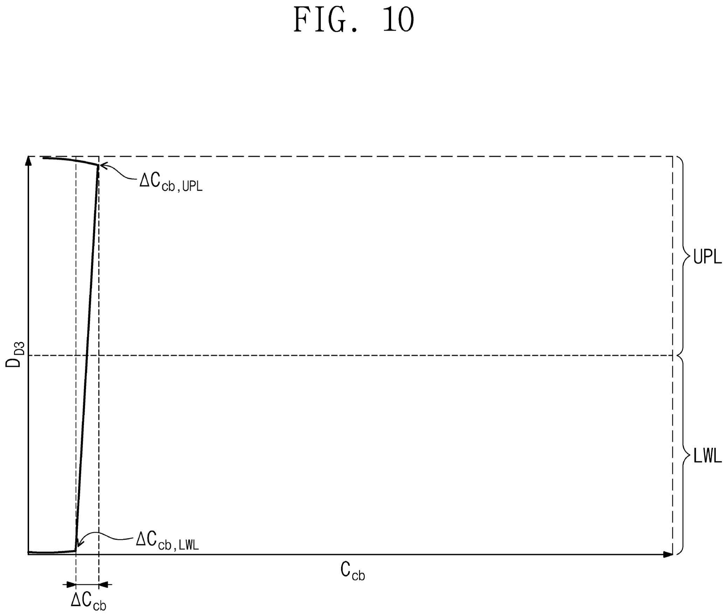

FIG. 6 is a cross-sectional view of a positive electrode 10 according to one or more embodiments of the present disclosure. FIG. 7 is an enlarged view of the region M in FIG. 6 according to one or more embodiments. FIGS. 8 and 9 are schematic diagrams for describing the positive electrode active material AM of one or more embodiments. FIG. 10 is a graph showing an amount of carbon (C_{cb}) in the third direction D3 in the positive electrode active material layer AML1 in FIG. 6 according to one or more embodiments. Hereinafter, for convenience of description, description of the same matters as those described with reference to FIGS. 1 to 5 will not be provided, and only differences will be described in more detail.

Referring to FIG. 6 and FIG. 7, a positive electrode 10 according to one or more embodiments of the present disclosure may include a current collector COL1 and a positive electrode active material layer AML1 on (e.g., formed on) the current collector COL 1. In one or more embodiments, the positive electrode active material layer AML1 may be a monolayer.

A thickness TK_{AML1} of the positive electrode active material layer AML1 may be about 20 micrometers (µm) to about 100 µm. For example, the thickness TK_{AML1} of the positive electrode active material layer AML1 may be about 20 µm or more, about 30 µm or more, about 40 µm or more, or about 50 µm or more. For example, the thickness TK_{AML1} of the positive electrode active material layer AML1 may be about 100 µm or less, about 90 µm or less, about 80 µm or less, about 70 µm or less, or about 60 µm or less.

The positive electrode active material layer AML1 may contain a positive electrode active material AM and an aggregate GAG, and may further contain a binder BND and/or a conductive material CDM. Each of the positive electrode active material AM and the aggregate GAG may be in a form of particles. The description of the binder BND is the same as that described above.

A total amount of the positive electrode active material AM and the aggregate GAG in the positive electrode active material layer AML1 may be about 90 wt% to about 99.5 wt% with respect to (e.g., based on) a total weight of 100 wt% of the positive electrode activity material layer AML1. For example, the total amount of the positive electrode active material AM and the aggregate GAG in the positive electrode active material layer AML1 may be about 90 wt% or more, about 95 wt% or more, about 96 wt% or more, about 97 wt % or more, about 97.5wt% or more, or 98 wt% or more, based on the total weight of 100 wt% of the positive electrode active material layer AML1. For example, the total amount of the positive electrode active material AM and the aggregate GAG in the positive electrode active material layer AML1 may be equal to or greater than about 90 wt% and about 99.5 wt% or less, about 99 wt% or less, or about 98.5 wt% or less, based on the total weight of 100 wt% of the positive electrode active material layer AML1.

The amount of the positive electrode active material AM in the positive electrode active material layer AML1 may be the remaining amount after excluding the amount of the aggregate GAG from the total amount of the positive electrode active material AM and the aggregates GAG in the positive electrode active material layer AML1 described above.

Referring to FIG. 7, the positive electrode active material AM may include at least one of a large particle PC or a small particle SP. For example, in one or more embodiments, the positive electrode active material AM may include the large particle PC. For example, in one or more embodiments, the positive electrode active material AM may include the small particle SP. For example, in one or more embodiments, the positive electrode active material AM may include the large particle PC and the small particle SP.

An average particle diameter D50_{PC} of the large particle PC may be larger than an average particle diameter D50_{SP} of the small particle SP. For example, in one or more embodiments, the average particle diameter D50_{PC} of the large particle PC may be about 6.0 µm to about 20.0 µm, about 10.0 µm to about 20.00 µm, or about 10.0 µm to about 15.0 µm. For example, in one or more embodiments, the average particle diameter D50_{SP} of the small particle SP may be about 1.0 µm to about 6.0 µm, about 2.0 µm to about 5.0 µm, or about 3.0 µm to about 5.0 µm. For example, the average particle diameter D50 may be obtained by randomly selecting each of about 30 large particles PC and 30 small particles SP in an electron microscope image of the positive electrode active material AM, measuring their particle diameters, and taking the diameter of particles having a cumulative volume of 50 vol% in the particle size distribution as the average particle diameter. As another example, the average particle diameter D50 may be measured by a particle size analyzer, and the diameter of particles having a cumulative volume of 50 vol% in the particle size distribution may be taken as the average particle diameter.

The positive electrode active material AM according to one or more embodiments of the present disclosure may be in a bimodal form including the large particle PC and the small particle SP having different average particle diameters. The small particle SP may fill the pores between the large particles PC, improving the packing density of the positive electrode active material layer AML1. For example, the positive electrode active material layer AML1 according to one or more embodiments of the present disclosure may have relatively high energy density and high capacity per unit volume.

For example, a weight ratio of the large particle PC to the small particle SP may be about 95:5 to about 50:50. For example, in one or more embodiments, the weight ratio of the large particle PC to the small particle SP may be about 90:10 to about 60:40, about 90:10 to about 70:30, or about 80:20 to about 70:30. In one or more embodiments, the weight ratio of the large particle PC to the small particle SP may be about 5:95 to about 50:50. For example, in one or more embodiments, an amount of the large particle PC may be greater than an amount of the small particle SP in the positive electrode active material AM.

For example, in one or more embodiments, the positive electrode active material AM may include only the large particle PC. For example, the small particle SP may not be provided.

Referring to FIG. 8, the large particle PC according to one or more embodiments of the present disclosure may be in a form of a polycrystal, and may have (e.g., be) a secondary particle in which at least two or more primary particles PRP are aggregated (e.g., agglomerated). The large particle PC may be spherical or elliptical in shape.

The large particle PC may include a core COR and a carbon coating layer CTL. The core COR of the large particle PC may be in a form of polycrystal, and may have (e.g., be) a secondary particle in which at least two or more primary particles PRPs are aggregated (e.g., agglomerated).

Referring to FIG. 9, the small particle SP according to one or more embodiments of the present disclosure may be in the form of a single particle, which refers to one particle that exists alone without a grain boundary therein. In terms of morphology, the single particle may refer to one particle, a monolith structure, a single unitary structure, or a non-aggregated (e.g., non-agglomerated) particle, existing as an independent phase in which particles do not aggregate with each other. For example, the small particle SP may be a single crystal. The positive electrode active material AM may include the small particle SP, so that high capacity, high energy density, and improved lifetime characteristics may be achieved.

The small particle SP may include a core COR' and a carbon coating layer CTL'.

Referring to FIG. 8 and FIG. 9, in one or more embodiments, each of the core COR of the large particle PC and the core COR' of the small particle SP may include a lithium nickel-based composite oxide. The lithium nickel-based composite oxide may include lithium (Li) and a transition metal. The transition metal may include nickel (Ni). An amount of nickel (Ni) contained in the lithium nickel-based composite oxide may not be limited.

For example, in one or more embodiments, the lithium nickel-based composite oxide may be a lithium nickel-based composite oxide containing a high amount of nickel (Ni). For example, the lithium nickel-based composite oxide may be a lithium nickel composite oxide in which the amount of nickel (Ni) based on a total metal excluding lithium is about 60 mol% or more, about 80 mol% or more, about 90 mol% or more, or about 91 mol% or more, and 100 mol% or less, about 99.9 mol% or less, or about 99 mol% or less. For example, the lithium nickel-based composite oxide may be a lithium nickel composite oxide in which the number of moles of nickel (Ni) relative to the total number of moles of the transition metals is about 60 mol% or more, about 80 mol% or more, about 90 mol% or more, or about 91 mol% or more, and 100 mol% or less, about 99.9 mol% or less, or about 99 mol% or less. When the amount of nickel (Ni) satisfies the above-described range, the positive electrode active material AM may achieve high capacity and high performance.

For example, in one or more embodiments, the lithium nickel-based composite oxide may be represented by Chemical Formula 1.

**Chemical Formula 1** Liₐ₁Niₓ₁M¹_{y1}M²_{z1}O_{2-b1}X_{b1}

In Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1. M¹ and M² may each independently be one or more elements selected from the group consisting of aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), strontium (Sr), titanium (Ti), vanadium (V), tungsten (W), yttrium (Y) and zirconium (Zr), and X may be one or more element selected from the group consisting of F, P, and S.

For example, in one or more embodiments, in Chemical Formula 1, 0.85≤x1≤1, 0≤y1≤0.15, and 0≤z1≤0.15 may be satisfied, or 0.9≤x1≤ 1, 0≤y1≤0.1, and 0≤x1≤0.1 may be satisfied.

For example, x1+y1+z1=1.

For example, in one or more embodiments, the lithium nickel-based composite oxide may be represented by Chemical Formula 2. The compound represented by Chemical Formula 2 may be a lithium nickel-cobalt-based composite oxide.

**Chemical Formula 2** Liₐ₂Niₓ₂Co_{y2}M³_{z2}O_{2-b2}X_{b2}

In Chemical Formula 2, 0.9≤a2≤1.8, 0.8≤x2<1, 0<y2≤0.2, 0≤z2≤0.2, 0.9≤x2+y2+z2≤1.1, and 0≤b2≤0.1. M³ may be one or more elements selected from the group consisting of Al, B, Ba, Ca, Ce, Cr, Fe, Mg, Mn, Mo, Nb, Si, Sr, Ti, V, W, Y and Zr, and X may be one or more element selected from the group consisting of F, P, and S.

For example, in one or more embodiments, in Chemical Formula 2, 0.85≤x2≤0.99, 0.01≤y2≤0.15, and 0.01≤z2≤0.15 may be satisfied, or 0.9≤x2≤ 0.99, 0.01≤y2≤0.1, and 0.01≤z2≤0.1 may be satisfied.

For example, x2+y2+z2=1.

For example, in one or more embodiments, the lithium nickel-based composite oxide may be represented by Chemical Formula 3. The compound represented by Chemical Formula 3 may be a lithium nickel-cobalt-aluminium oxide or a lithium nickel-cobalt-manganese oxide.

**Chemical Formula 3** Liₐ₃Niₓ₃Co_{y3}M⁴_{z3}M⁵_{w3}O_{2-b3}X_{b3}

In Chemical Formula 3, 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1. M⁴ may one or more elements selected from the group consisting of Al and Mn, M⁵ may be one or more element selected from the group consisting of B, Ba, Ca, Ce, Cr, Fe, Mg, Mo, Nb, Si, Sr, Ti, V, W, Y and Zr, and X may be one or more elements selected from the group consisting of F, P and S.

For example, in one or more embodiments, in Chemical Formula 3, 0.85≤x3≤0.98, 0.01≤y3≤0.14, 0.01≤z3≤0.14 and 0≤w3≤0.14 may be satisfied, or 0.9≤x3≤ 0.98, 0.01≤y3≤0.09, 0.01≤z3≤0.09 and 0≤w3≤0.09 may be satisfied.

For example, x3+y3+z3+w3=1.

The carbon coating layer CTL may be located on the core COR of the large particle PC. The carbon coating layer CTL' may be located on the core COR' of the small particle SP. For example, the carbon coating layers CTL and CTL' may be identified through component analysis on the positive electrode active material AM. When the positive electrode active material AM includes the carbon coating layers CTL and CTL', the lithium nickel-based composite oxide that constitutes the cores COR and COR' may be in direct contact with the carbon-based material that constitutes the carbon coating layers CTL and CTL', which may improve the conductivity of the positive electrode active material layer AML1. In addition, the amount of the conductive material CDM in the electrode plate including the positive electrode active material AM may be reduced, thereby securing additional space within the electrode plate having the same mixture density. Thus, the positive electrode active material AM may be prevented or reduced from cracking during the electrode plate rolling, and a rechargeable lithium battery having an excellent or suitable lifetime may be provided.

The carbon coating layer CTL may be located on a part of a surface of the core COR of the large particle PC. The carbon coating layer CTL' may be located on a part of a surface of the core COR' of the small particle SP. For example, the carbon coating layers CTL and CTL' may be present in the form of islands on the core COR of the large particles PC and the core COR' of the small particle SP, respectively. The carbon coating layer CTL and CTL' may expose a portion of the surface of the core COR of the large particle PC and a portion of the surface of the core COR' of the small particle SP. Thus, the positive electrode active material AM may serve as a pathway for the movement of lithium ions or electrons.

The carbon coating layers CTL and CTL' may include a carbon-based material. In one or more embodiments, the carbon coating layers CTL and CTL' may include graphene. The carbon coating layers CTL and CTL' may be formed from graphene particles added in the manufacturing of the positive electrode active material AM and the aggregate GAG, which will be described later. Graphene is an allotrope of carbon, and may have a structure in which carbon atoms gather (e.g., bond) to form a two-dimensional plane. Each of the carbon atoms may form a lattice of hexagons with the carbon atoms located at the vertices of the hexagons. Graphene may be in the form of a sheet.

For example, a lateral size of graphene may be about 0.1 µm to about 1000 µm. For example, the lateral size of graphene may be about 0.1 µm to about 500 µm, about 0.1 µm to about 200 µm, about 0.1 µm to about 100 µm, about 0.1 µm to about 50 µm, about 0.1 µm to about 10 µm, about 0.1 µm to about 5 µm, or about 0.1 µm to 3 µm. The lateral size of graphene may refer to the longest distance between any two ends connected on the plane of the graphene sheet.

For example, a thickness of graphene may be less than or equal to about 1 nanometer (nm). For example, the thickness of graphene may be about 0.1 nm to about 0.5 nm. The thickness of graphene may refer to a distance in the thickness direction of graphene sheet.

For example, in one or more embodiments, graphene may be pure graphene. For example, pure graphene may substantially be free of oxygen, i.e. it may not contain oxygen. Pure graphene may have good or suitable electrical conductivity, chemical stability, and mechanical strength.

In one or more embodiments, graphene may be at least one of graphene oxide, reduced graphene oxide, or a combination thereof. Reduced graphene oxide may be a material that includes reduced graphene oxide. By using reduced graphene oxide instead of pure graphene, cost may be reduced, and mass production may be made possible.

For example, reduced graphene oxide may include some oxidized portions, unlike pure graphene. Reduced graphene oxide may include a small amount of oxygen. Defects may be present in the reduced graphene oxide. As a result, reduced graphene oxide may improve or optimize interfacial reactions in a rechargeable lithium battery, or may increase the storage capacity of lithium ions by adsorbing or diffusing lithium ions. Reduced graphene oxide may have sufficient electrical conductivity, chemical stability, and mechanical strength to improve or optimize the performance of a rechargeable lithium battery.

For example, reduced graphene oxide may have a carbon-oxygen covalent bond. The carbon-oxygen covalent bond may include C-O, C=O, O-C=O, and/or the like.

For example, in one or more embodiments, the constituents of the carbon coating layers CTL and CTL' may be identified via X-ray Photoelectron Spectroscopy (XPS). As a result of XPS analysis, a peak corresponding to a carbon-oxygen covalent bond may be observed on the surface of the carbon coating layers CTL and CTL' formed using reduced graphene oxide. In contrast, on the surface of the carbon coating layers CTL and CTL' formed using pure graphene, the intensity of the peak corresponding to the carbon-oxygen covalent bond may be reduced or nearly absent.

For example, in one or more embodiments, Raman Spectroscopy may be used to identify the constituents of the carbon coating layers CTL and CTL'. Defects in reduced graphene oxide may be identified via the D-band of Raman Spectroscopy. In a Raman spectrum, the carbon coating layers CTL and CTL' formed using reduced graphene oxide may have relatively large D-band intensity and large D/G ratio value. In contrast, the carbon coating layers CTL and CTL' formed using pure graphene may have reduced D-band intensity and D/G ratio value.

For example, in one or more embodiments, the constituents of the carbon coating layers CTL and CTL' may be determined by using Fourier Transform Infrared Spectroscopy (FT-IR). In the FT-IR spectrum of the positive electrode active material AM including the carbon coating layers CTL and CTL' formed using reduced graphene oxide, a peak corresponding to a carbon-oxygen covalent bond may be observed. In contrast, in the FT-IR spectrum of the positive electrode active material AM including the carbon coating layers CTL and CTL' formed using pure graphene, a peak corresponding to the carbon-oxygen covalent bond may be reduced or nearly absent.

For example, in one or more embodiments, the constituents of the carbon coating layers CTL and CTL' may be determined by using Thermogravimetric Analysis (TGA). A TGA graph for a positive electrode active material AM including the carbon coating layers CTL and CTL' formed using reduced graphene oxide may show a loss in mass due to the release of oxygen upon heating. In contrast, a TGA graph for a positive electrode active material AM including the carbon coating layers CTL and CTL' formed using pure graphene may show less or little mass loss.

The conductivity of graphene constituting the carbon coating layers CTL and CTL' may be greater than the conductivity of the carbon-based material constituting the conductive material CDM. The positive electrode active material AM of one or more embodiments contains graphene, so that the conductivity of the positive electrode active material layer AML1 may be further improved.

An amount of the carbon coating layers CTL and CTL' in the positive electrode active material AM may be about 0.01 wt% to about 1 wt% relative to the total weight of the positive electrode active material AM. For example, the amount of the carbon coating layers CTL and CTL' in the positive electrode active material AM may be about 0.01 wt% or more, about 0.05 wt% or more, or about 0.1 wt% or more relative to the total weight of the positive electrode active material AM. For example, the amount of the carbon coating layers CTL and CTL' in the positive electrode active material AM may be about 1 wt% or less, about 0.5 wt% or less, about 0.3 wt% or less, or about 0.2 wt% or less relative to the total weight of the positive electrode active material AM. When the amount of the carbon coating layers CTL and CTL' satisfy the ranges described above, the positive electrode active material AM may have excellent or suitable conductivity. In addition, the amount of the conductive material CDM in the electrode plate may be reduced, thereby securing additional space within the electrode plate having the same mixture density. Thus, the positive electrode active material AM may be prevented or reduced from cracking during the electrode plate rolling, and a rechargeable lithium battery having an excellent or suitable lifetime may be provided.

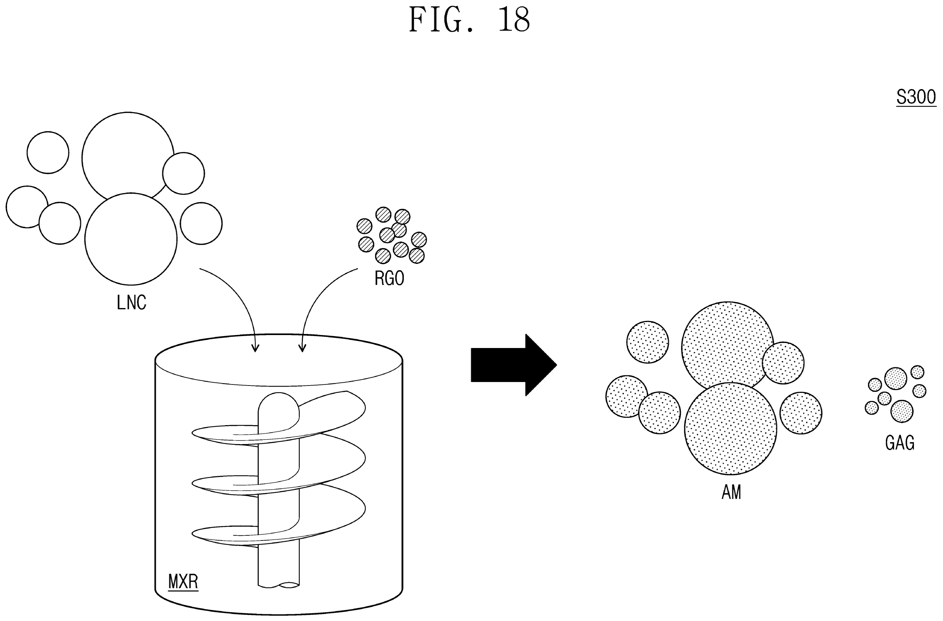

For example, in one or more embodiments, the carbon coating layers CTL and CTL' may be formed using particles containing reduced graphene oxide (see RGO in FIG. 18). The form of the reduced graphene oxide particles may be in the form of flakes or in the form of cabbage-like structures. For example, if (e.g., when) the reduced graphene oxide particles RGO in the form of flakes are used, a larger amount of the carbon coating layers CTL and CTL' may be formed than if (e.g., when) the reduced graphene oxide particles RGO in the form of cabbage-like structures are used. For example, the reduced graphene oxide particles in the form of flakes may have a larger surface capable of reacting with the lithium nickel-based composite oxide than the reduced graphene oxide particles in the form of cabbage-like structures. The reduced graphene oxide particles RGO in the form of flakes, which have a thin and flat morphology, may have a larger surface capable of reacting with the lithium nickel-based composite oxide than the reduced graphene oxide particles RGO in the form of cabbage-like structures, which are stacked in multiple layers and have a rounded morphology.

For example, the concentration of carbon present on the surface of the positive electrode active material AM may be measured through X-ray photoelectron spectroscopy (XPS). Through XPS, the relative concentration of carbon element at the surface of the positive electrode active material AM formed using reduced graphene oxide particles in the form of flakes or cabbage-like structures may be compared. For example, a result of XPS analysis may show that the surface of the positive electrode active material AM formed using flake-shaped reduced graphene oxide particles exhibits a stronger carbon signal compared to the surface of a positive electrode active material AM formed using cabbage-shaped reduced graphene oxide particles.

For example, the proportion (e.g., atomic percent) of carbon present on the surface of the positive electrode active material AM may be measured by Energy Dispersive X-ray Spectroscopy (EDS). Through the EDS analysis, it may be detected that the proportion of carbon on the surface of the positive electrode active material AM formed using reduced graphene oxide particles in the form of flakes is larger than the proportion of carbon on the surface of the positive electrode active material AM formed using reduced graphene oxide particles in a form of cabbage-like structures.

For example, the presence or absence of the carbon coating layers CTL and CTL' on the surface of the positive electrode active material AM may be confirmed through Raman Spectroscopy. In the case of the positive electrode active material AM formed using reduced graphene oxide particles in the form of flakes, a peak specific to the carbon coating layers CTL and CTL' may appear stronger in a Raman spectrum compare to the positive electrode active material AM formed using reduced graphene oxide particles in a form of cabbage-like structures.

A thickness of the carbon coating layers CTL and CTL' may be about 10 nm or less. For example, in one or more embodiments, the thickness of the carbon coating layers CTL and CTL' may be about 1 nm to about 10 nm, or about 1 nm to about 5 nm. When the thicknesses of the carbon coating layers CTL and CTL' satisfy the ranges described above, the positive electrode active material AM may have excellent or suitable conductivity. In addition, the amount of the conductive material CDM in the electrode plate may be reduced, thereby securing additional space within the electrode plate having the same mixture density. Thus, the positive electrode active material AM may be prevented or reduced from cracking during the electrode plate rolling, and a rechargeable lithium battery having an excellent or suitable lifetime may be provided.

In one or more embodiments, the positive electrode active material AM may further include a transition metal coating layer located on a surface of each of the large particle PC and the small particle SP. The transition metal coating layer may be located on the entire surface, or at least a portion, of each of the large particle PC or the small particle SP. The transition metal coating layer may be located between the cores COR and COR' and the carbon coating layers CTL and CTL'. For example, in one or more embodiments, the positive electrode active material AM may further include a transition metal coating layer located on the surface of the primary particles PRPs inside the large particle PC, i.e., coated along the interface of the primary particles PRPs. For example, the transition metal coating layer may include, but is not limited to, nickel, cobalt, aluminium, and/or the like. Each of the large particle PC and the small particle SP may include the transition metal coating layer, so that the collapse of the structure due to repetition of charge and discharge may be effectively suppressed or reduced and the lifetime characteristics may be improved.

Referring back to FIG. 7, the conductive material CDM may include, for example, the above-described carbon-based material. For example, the carbon-based material may include at least one selected from the group consisting of natural graphite, artificial graphite, carbon black, acetylene black, Ketjen black, carbon fiber, carbon nanofiber, and carbon nanotube. The conductive material CDM may improve adhesion between the positive electrode active materials AMs.

In one or more embodiments, the carbon-based material constituting the conductive material CDM may have a one-dimensional nanostructure. The one-dimensional nanostructure may be defined as, for example, a structure in which the size of any one of three dimensions is larger than the sizes of the other two dimensions. For example, in one or more embodiments, the one-dimensional nanostructure may be defined as a nanostructure in which a length of the nanostructure is much larger than a diameter or a width and a thickness of the nanostructure.

The carbon-based material constituting the conductive material CDM may have a length of about 1 µm to about 200 µm. For example, the carbon-based material may have a length of about 5 µm to about 50 µm.

An aspect ratio of the carbon-based material constituting the conductive material CDM may be about 10 to about 3000. For example, in one or more embodiments, the aspect ratio of the carbon-based material may be about 10 to about 2600, about 20 to about 2500, or about 30 to about 2400. The aspect ratio may be calculated as a ratio of the length of the carbon-based material to the diameter of the carbon-base material.

When the length and the aspect ratio of the carbon-based material satisfy the ranges described above, the positive electrode active material AM may be connected to each other, and a sufficient contact area between the positive electrode active materials AMs may be secured.

For example, the structure and the length of the carbon-based material constituting the conductive material CDM may be confirmed through scanning electron microscopy (SEM), transmission electron microscopy (TEM), atomic force microscopy (AFM), and/or the like.

For example, the carbon-based material constituting the conductive material CDM may be identified through Raman Spectroscopy. For example, a radial breathing mode (RBM) peak may appear in a range of about 70 cm⁻¹ to about 300 cm⁻¹ in a Raman spectrum for the conductive material CDM. For example, the G⁻-band and the G⁺-band may appear in the Raman spectrum for the conductive material CDM.

For example, the carbon-based material constituting the conductive material CDM may be identified through X-ray Photoelectron Spectroscopy (XPS). In the XPS spectrum, a peak corresponding to a carbon-carbon covalent bond may be mainly observed on the surface of the conductive material CDM. In addition, a result of XPS analysis may show few peaks corresponding to carbon-oxygen covalent bonds on the surface of the conductive material CDM.

An amount of the conductive material CDM may be about 0.5 wt% to 2 wt% with respect to (e.g., based on) the total weight of 100 wt% of the positive electrode active material layer AML1. For example, in one or more embodiments, the amount of the conductive material CDM may be about 0.5 wt% to about 1.5 wt%, or about 0.5 wt% to about 1 wt% with respect to the total weight of 100 wt% of the positive electrode active material layer AML1.

In one or more embodiments, a weight ratio of the conductive material CDM to the positive electrode active material AM may be about 0.7/99.5 to about 0.7/97. For example, the weight ratio of the conductive material CDM to the positive electrode active material AM may be about 0.7/99.5 or more, about 0.7/99 or more, about 0.7 /98.5 or more, or about 0.7/98 or more. For example, the weight ratio of the conductive material CDM to the positive electrode active material AM may be about 0.7/97 or less, or about 0.7/97.5 or less.

Because the positive electrode 10 includes the positive electrode active material AM, the amount of the conductive material CDM in the electrode plate may be reduced, thereby securing additional space within the electrode plate having the same mixture density. Thus, the positive electrode active material AM may be prevented or reduced from cracking during the electrode plate rolling, and a rechargeable lithium battery having an excellent or suitable lifetime may be provided.

Referring again to FIG. 7, the aggregate GAG includes a carbon-based material, which includes graphene. The aggregate GAG may be formed from graphene particles added during the manufacturing of the positive electrode active material AM and the aggregate GAG, which will be described later.

The structure of the aggregate GAG may not be limited. For example, the aggregate GAG may be spherical, elliptical, or amorphous (irregular or non-uniform). The aggregate GAG may be formed when graphene particles break or aggregate with each other.

The aggregate GAG may vary in particle diameters DGR. The aggregate GAG may have a particle diameter DGR of about 40 µm or less. For example, in one or more embodiments, the particle diameter DGR of the aggregate GAG may be about 1 µm to about 40 µm, or about 1 µm to about 30 µm. For example, the particle diameter may be a value measured by selecting and measuring about 30 aggregates GAGs in an electron micrograph image of the aggregates GAG. When the particle diameter DGR of the aggregate GAG satisfies the range described above, a positive electrode and a rechargeable lithium battery having low resistance may be provided.

For example, the aggregate GAG may have a structure expanded in a three-dimensional direction as compared with the conductive material CDM. For example, the structure of the aggregate GAG may be confirmed by scanning electron microscope (SEM), transmission electron microscopy (TEM), atomic force microscopy (AFM), and/or the like.

In one or more embodiments, graphene constituting the aggregate GAG may be pure graphene. For example, pure graphene may substantially be free of oxygen. Pure graphene may not contain oxygen. Pure graphene may have good or suitable electrical conductivity, chemical stability, and mechanical strength.

In one or more embodiments, graphene constituting the aggregate GAG may be at least one of graphene oxide, reduced graphene oxide, or a combination thereof. Reduced graphene oxide may be a material that has reduced graphene oxide. By using reduced graphene oxide instead of pure graphene, cost may be reduced, and mass production may be made possible.

In one or more embodiments, reduced graphene oxide may include some oxidized portions, unlike pure graphene. Reduced graphene oxide may include a small amount of oxygen. Defects may be present in reduced graphene oxide. As a result, reduced graphene oxide may improve or optimize interfacial reactions in a rechargeable lithium battery, or may increase the storage capacity of lithium ions by adsorbing or diffusing lithium ions. Reduced graphene oxide may have sufficient electrical conductivity, chemical stability, and mechanical strength to improve or optimize the performance of a rechargeable lithium battery.

For example, reduced graphene oxide may have a carbon-oxygen covalent bond. The carbon-oxygen covalent bond may include C-O, C=O, O-C=O, and/or the like.

For example, the constituents of the aggregates GAG may be identified via X-ray Photoelectron Spectroscopy (XPS). As a result of XPS analysis, a peak corresponding to a carbon-oxygen covalent bond may be observed on the surface of the aggregate GAG formed using reduced graphene oxide. In contrast, on the surface of the aggregate GAG formed using pure graphene, the intensity of the peak corresponding to carbon-oxygen covalent bonds may be reduced or nearly absent.

For example, Raman Spectroscopy may be used to identify the constituents of the aggregate GAG. Defects in reduced graphene oxide may be identified via the D-band of Raman Spectroscopy. In a Raman spectrum, the aggregate GAG formed using reduced graphene oxide may have relatively large D-band intensity and large D/G ratio value. In contrast, the aggregates GAG formed using pure graphene may have reduced D-band intensity and D/G ratio value.

For example, the constituents of the aggregates GAG may be determined by using Fourier Transform Infrared Spectroscopy (FT-IR). In the FT-IR spectrum of the aggregate GAG formed using reduced graphene oxide, a peak corresponding to a carbon-oxygen covalent bond may be observed. In contrast, in the FT-IR spectrum of the aggregate GAG formed using pure graphene, a peak corresponding to carbon-oxygen covalent bonds may be reduced or nearly absent.

For example, the constituents of the aggregate GAG may be determined by using Thermogravimetric Analysis (TGA). A TGA graph for the aggregate GAG formed using reduced graphene oxide may show a loss in mass due to the release of oxygen upon heating. In contrast, a TGA graph for the aggregate GAG formed using pure graphene may show less or little mass loss.

Graphene constituting the aggregate GAG may be in the form of a sheet. In one or more embodiments, the lateral size of graphene constituting the aggregate GAG may be about 0.1 µm to about 1000 µm. For example, the lateral size of graphene constituting the aggregate GAG may be about 0.1 µm to about 500 µm, about 0.1 µm to about 200 µm, about 0.1 µm to about 100 µm, about 0.1 µm to about 50 µm, about 0.1 µm to about 10 µm, about 0.1 µm to about 5 µm, or about 0.1 µm to about 3 µm.

For example, a thickness of the graphene may be less than or equal to about 1 nm. For example, the thickness of graphene may be about 0.1 nm to about 0.5 nm. The thickness of graphene may refer to a distance in the thickness direction of graphene sheet.

Because the aggregate GAG is formed from part of the added graphene particles, the aggregate GAG may be contained in a relatively small amount in the positive electrode active material layer AML1. In the manufacturing of the positive electrode active material layer AML1, a small amount of the aggregate GAG may not be clumped to each other to form a bulk, or even if formed, may form a relatively small bulk. The bulk may be graphene particles that are clumped together. In one or more embodiments, the positive electrode active material layer AML1 may be substantially free of the bulk. Thus, a positive electrode and a rechargeable lithium battery having low resistance may be provided.

For example, reduced graphene oxide particles RGO in the form of flakes may form fewer aggregates GAGs than reduced graphene oxide particles RGO in the form of cabbage-like structures.

For example, the amount of the aggregate GAG may be measured through Energy Dispersive X-ray Spectroscopy (EDS) and/or the like on the positive electrode 10.

The positive electrode active material layer AML1 according to FIG. 6 may have the following characteristics. The aggregate GAG in the positive electrode active material layer AML1 in accordance with one or more embodiments of the present disclosure may primarily exist inside the positive electrode active material layer AML1. For example, some of the aggregate GAG may be distributed in an upper layer portion in the positive electrode active material layer AML1. The distribution of the aggregate GAG in the positive electrode active material layer AML1 according to one or more embodiments of the present disclosure may be relatively gradual in the third direction D3 (e.g., thickness direction) of the positive electrode active material layer AML1. In one or more embodiments, the distribution of the aggregate GAG in the positive electrode active material layer AML1 may be described with reference to FIG. 10.

Referring to FIG. 10, the positive electrode active material layer AML1 may be divided into an upper layer portion UPL and a lower layer portion LWL along the third direction D3. The lower layer portion LWL may be located on the current collector COL1. The upper layer portion UPL may be located on the lower layer portion LWL. A thicknesses ratio of the upper layer portion UPL to the lower layer portion LWL may be 1:1.

Each of the upper layer portion UPL and the lower layer portion LWL may include the aggregate GAG. For example, an amount (C_{RG1}) of the aggregate in the upper layer portion UPL may be slightly greater than the amount (C_{RG2}) of aggregate in the lower layer portion LWL. However, a difference (ΔC_{cb}) between the maximum amount of carbon in the upper layer portion UPL and the minimum amount of carbon in the lower layer portion LWL may be relatively small.

For example, the distribution of the aggregate GAG may be confirmed by examining the amount of carbon (C_{cb}) in the third direction D3 in the positive electrode active material layer AML1. For example, the amount of carbon (C_{cb}) may be the average of the carbon amount values calculated from the results of component analysis (EDS and/or the like) performed at about 20 points at each depth of the positive electrode active material layer AML1, and the carbon amount values at each depth may be plotted sequentially on a graph.

The positive electrode active material layer AML1 according to one or more embodiments of the present disclosure may include little bulk. The bulk may be graphene particles that are clumped together. The bulk may be the aggregates GAGs that are clumped together. The positive electrode active material layer AML1 according to one or more embodiments of the present disclosure may not include (e.g., may exclude) bulk, or may include relatively small bulk. The size of the bulk may be larger than the size of the aggregate GAG. For example, the size of the bulk included in the positive electrode active material layer AML1 of the present disclosure may be larger than about 40 µm and smaller than about 50 µm.

Thus, the positive electrode active material layer AML1 of the present disclosure may provide the positive electrode 10 with low resistance.

In the following embodiments, for convenience of description, description of the same matters as those described with reference to FIGS. 1 to 10 will not be provided, and only differences will be described in more detail.

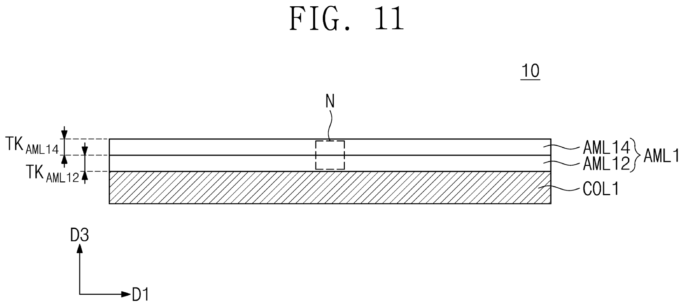

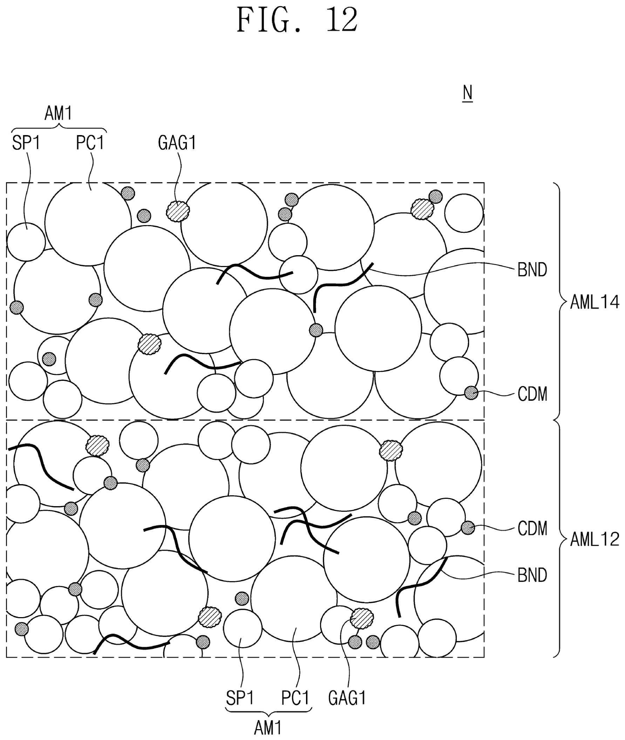

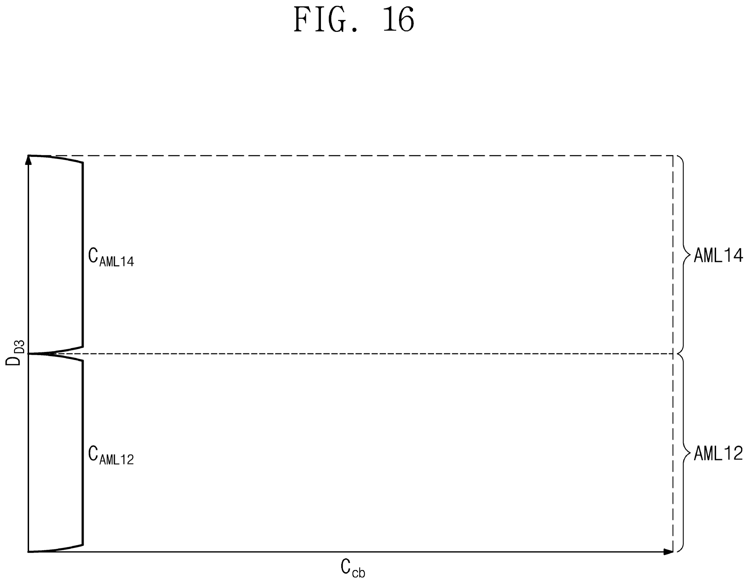

FIG. 11 is a cross-sectional view of a positive electrode 10 according to one or more embodiments of the present disclosure. FIGS. 12 to 15 are enlarged views of the 'N' region of FIG. 11 according to one or more embodiments. FIG. 16 is a graph showing the amount of carbon (C_{cb}) in the third direction D3 in the positive electrode active material layer AML1 in FIG. 11 according to one or more embodiments.

Referring to FIG. 11, a positive electrode 10 according to one or more embodiments of the present disclosure includes a current collector COL1 and a positive electrode active material layer AML1 on (e.g., formed on) the current collector COL 1.

The positive electrode active material layer AML1 includes a first positive electrode active material layer AML12 and may also include a second positive electrode active materials layer AML14. The first positive electrode active material layer AML12 is located on the current collector COL1. The second positive electrode active material layer AML14 may be located on the first positive electrode active material layer AML12.

The thickness of the positive electrode active material layer AML1 may be the same as described above.

A thickness ratio of the first positive electrode active material layer (TK_{AML12}) to the second positive electrode active material layer (TK_{AML14}) may be about 2:1 to about 1:2. For example, in one or more embodiments, the thickness ratio of the first positive electrode active material layer (TK_{AML12}) to the second positive electrode active material layer (TK_{AML14}) may be about 1:1. When the thickness ratio of the first positive electrode active material layer (TK_{AML12}) to the second positive electrode active material layer (TK_{AML14}) satisfies the above-described range, the aggregate GAG may be present relatively inside the positive electrode active material AML1, so that a positive electrode and a rechargeable lithium battery with low resistance may be provided.

According to one or more embodiments, referring to FIG. 12, the first positive electrode active material layer AML12 includes a first positive electrode active material AM1 and a first aggregate GAG1, and may further include the binder BND and/or the conductive material CDM. The second positive electrode active material layer AML14 likewise may include the first positive electrode active material AM1 and the first aggregate GAG1, and may further contain the binder BND and/or the conductive material CDM.

The first positive electrode active material AM1 includes a carbon coating layer. The carbon coating layer is formed using graphene particles. For example, the carbon coating layer of the first positive electrode active material AM1 may be formed using particles containing reduced graphene oxide. For example, in one or more embodiments, the carbon coating layer of the first positive electrode active material AM1 may be formed using reduced graphene oxide particles in the form of flakes.

The first aggregate GAG1 is formed using graphene particles. For example, in one or more embodiments, the first aggregate GAG1 may be formed using reduced graphene oxide particles. The first aggregates GAG1 may be formed using reduced graphene oxide particles in the form of flakes.

A total amount of the first positive electrode active material AM1 and the first aggregate GAG1 in the first positive electrode active material layer AML12 may be about 90 wt% to about 99.5 wt% with respect to the total weight of 100 wt% of the first positive electrode active material layer AML12. For example, the total amount of the first positive electrode active material AM1 and the first aggregate GAG1 in the first positive electrode active material layer AML12 may be about 90 wt% or more, about 95 wt% or more, about 96 wt% or more, about 97 wt% or more, about 97.5 wt% or more, or about 98 wt% or more. For example, the total amount of the first positive electrode active material AM1 and the first aggregate GAG1 in the first positive electrode active material layer AML12 may be equal to or greater than about 90 wt% and about 99.5 wt% or less, about 99 wt% or less, or about 98.5 wt% or less with respect to the total weight of 100 wt% of the first positive electrode active material layer AML12.

An amount of the first positive electrode active material AM1 in the first positive electrode active material layer AML12 may be the remaining amount after excluding the amount of the first aggregate GAG1 from the total amount of the first negative electrode active material AM1 and the first aggregate GAG1 in the above-described first positive electrode active material layer AML12.

A total amount of the first positive electrode active material AM1 and the first aggregate GAG1 in the second positive electrode active material layer AML14 may be about 90 wt% to about 99.5 wt% with respect to the total weight of 100 wt% of the second positive electrode active material layer AML 14. For example, the total amount of the first positive electrode active material AM1 and the first aggregate GAG1 in the second positive electrode active material layer AML14 may be about 90 wt% or more, about 95 wt% or more, about 96 wt% or more, about 97 wt% or more, about 97.5 wt% or more, or about 98 wt% or more. For example, the total amount of the first positive electrode active material AM1 and the first aggregate GAG1 in the second positive electrode active material layer AML14 may be equal to or greater than about 90 wt% and about 99.5 wt% or less, about 99 wt% or less, or about 98.5 wt% or less with respect to the total weight of 100 wt% of the second positive electrode active material layer AML14.

An amount of the first positive electrode active material AM1 in the second positive electrode active material layer AML14 may be the remaining amount after excluding the amount of the aggregate GAG1 the total amount of the first negative electrode active material AM1 and the first aggregate GAG1 in the above-described second positive electrode active material layer AML14.

The first positive electrode active material AM1 may include at least one of the large particle PC1 or the small particle SP1. For example, in one or more embodiments, the first positive electrode active material AM1 may include the large particle PC1. For example, in one or more embodiments, the first positive electrode active material AM1 may include the small particle SP1. For example, in one or more embodiments, the first positive electrode active material AM1 may include the large particle PC1 and the small particle SP1.

The large particle PC1 may include a core and a carbon coating layer (see COR and CTL in FIG. 8). The small particle SP1 may include a core and a carbon coating layer (see COR' and CTL' in FIG. 9).

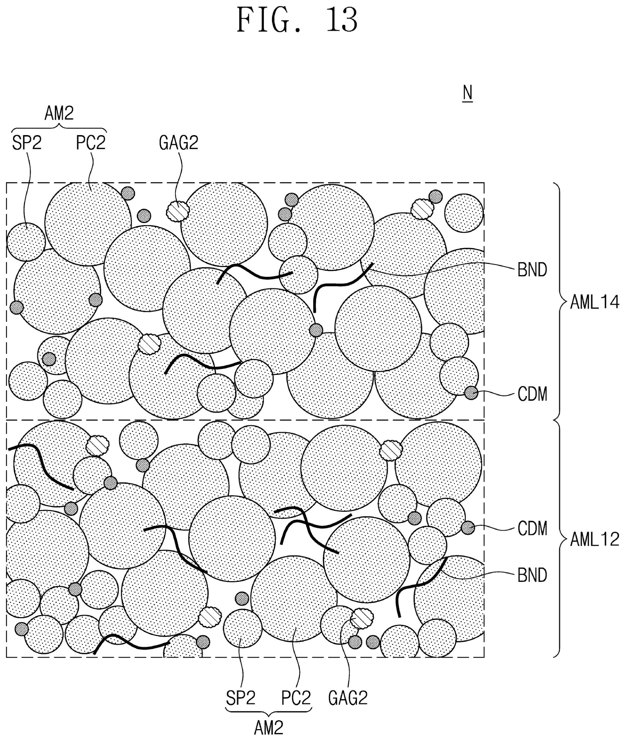

According to one or more embodiments, referring to FIG. 13, the first positive electrode active material layer AML12 includes a second positive electrode active material AM2 and a second aggregate GAG2, and may further include the binder BND and/or the conductive material CDM. The second positive electrode active material layer AML14 may also include the second positive electrode active material AM2 and the second aggregate GAG2, and may further contain the binder BND and/or the conductive material CDM.

The second positive electrode active material AM2 includes a carbon coating layer. The carbon coating layer is formed using graphene particles. For example, the carbon coating layer of the second positive electrode active material AM2 may be formed using particles containing reduced graphene oxide. For example, in one or more embodiments, the carbon coating layer of the second positive electrode active material AM2 may be formed using reduced graphene oxide particles in the form of cabbage-like structures.

The second aggregate GAG2 is formed using graphene particles. For example, in one or more embodiments, the second aggregate GAG2 may be formed using reduced graphene oxide particles. The second aggregates GAG2 may be formed using reduced graphene oxide particles in the form of cabbage-like structures.

A total amount of the second positive electrode active material AM2 and the second aggregate GAG2 in the first positive electrode active material layer AML12 may be about 90 wt% to about 99.5 wt% with respect to the total weight of 100 wt% of the first positive electrode active material layer AML 12. For example, the total amount of the second positive electrode active material AM2 and the second aggregate GAG2 in the first positive electrode active material layer AML12 may be about 90 wt% or more, about 95 wt% or more, about 96 wt% or more, about 97 wt% or more, about 97.5 wt% or more, or about 98 wt% or more. For example, the total amount of the second positive electrode active material AM2 and the second aggregate GAG2 in the first positive electrode active material layer AML12 may be equal to or greater than about 90 wt% and about 99.5 wt% or less, about 99 wt% or less, or about 98.5 wt% or less with respect to the total weight of 100 wt% of the first positive electrode active material layer AML12.

The amount of the second positive electrode active material AM2 in the first positive electrode active material layer AML12 may be the remaining amount after excluding the amount of the second aggregate GAG2 from the total amount of the second negative electrode active material AM2 and the second aggregate GAG2 in the above-described first positive electrode active material layer AML12.

A total amount of the second positive electrode active material AM2 and the second aggregate GAG2 in the second positive electrode activity material layer AML14 may be about 90 wt% to about 99.5 wt% with respect to the total weight of 100 wt% of the second positive electrode active material layer AML14. For example, the total amount of the second positive electrode active material AM2 and the second aggregate GAG2 in the second positive electrode active material layer AML14 may be about 90 wt% or more, about 95 wt% or more, about 96 wt% or more, about 97 wt% or more, about 97.5 wt% or more, or about 98 wt% or more. For example, the total amount of the second positive electrode active material AM2 and the second aggregate GAG2 in the second positive electrode active material layer AML14 may be equal to or greater than about 90 wt% and about 99.5 wt% or less, about 99 wt% or less, or about 98.5 wt% or less, with respect to the total weight of 100 wt% of the second positive electrode active material layer AML14.

The amount of the second positive electrode active material AM2 in the second positive electrode active material layer AML14 may be the remaining amount after excluding the amount of the second aggregate GAG2 from the total amount of the second positive electrode active material AM2 and the second aggregates GAG2 in the above-described second positive electrode active material layer AML14.

The second positive electrode active material AM2 may include at least one of the large particle PC2 or the small particle SP2. For example, in one or more embodiments, the second positive electrode active material AM2 may include the large particle PC2. For example, in one or more embodiments, the second positive electrode active material AM2 may include the small particle SP2. For example, in one or more embodiments, the second positive electrode active material AM2 may include the large particle PC2 and the small particle SP2.

The large particle PC2 may include a core and a carbon coating layer (see COR and CTL in FIG. 8). The small particle SP2 may include a core and a carbon coating layer (see COR' and CTL' in FIG. 9).

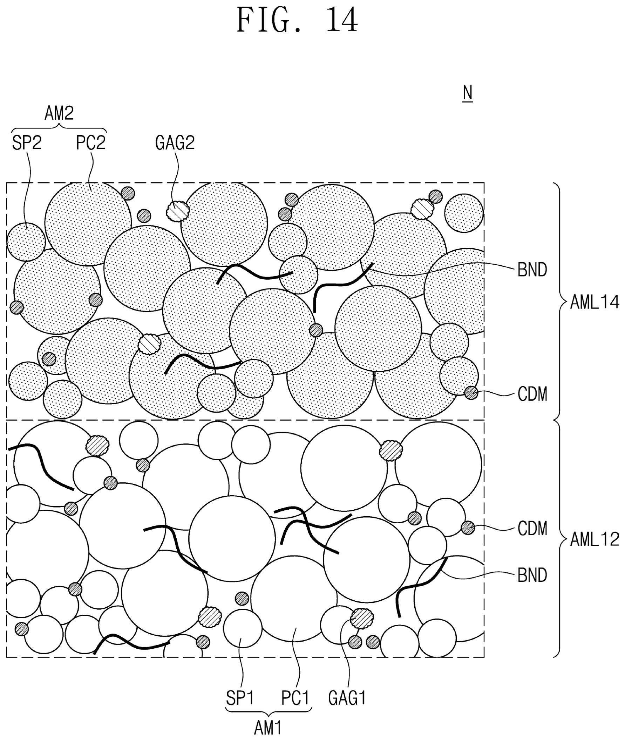

According to one or more embodiments, referring to FIG. 14, the first positive electrode active material layer AML12 includes the above-described first positive electrode active material AM1 and the above-described first aggregate GAG1, and may further include the binder BND and/or the conductive material CDM. The second positive electrode active material layer AML14 may also include the above-described second positive electrode active material AM2 and the above-described second aggregate GAG2, and may further include the binder BND and/or the conductive material CDM.

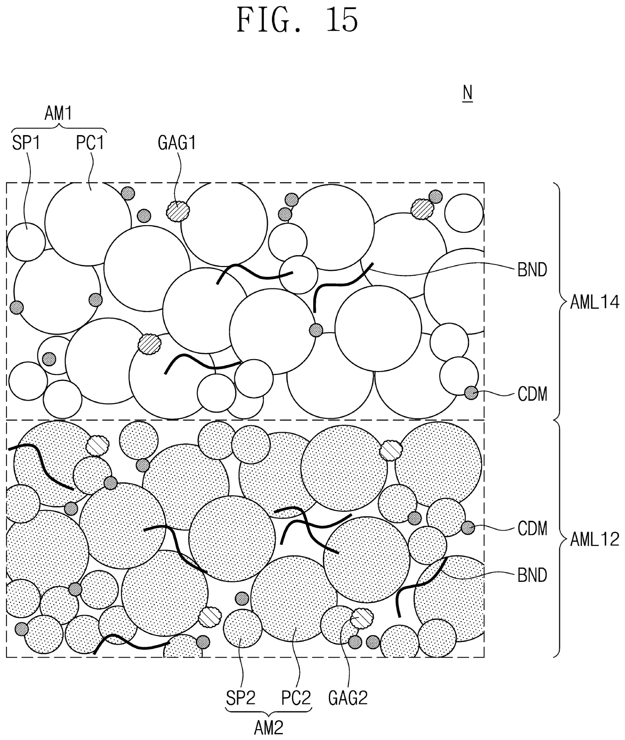

According to one or more embodiments, referring to FIG. 15, the first positive electrode active material layer AML12 includes the above-described second positive electrode active material AM2 and the above-described second aggregate GAG2, and may further include the binder BND and/or the conductive material CDM. The second positive electrode active material layer AML14 may also include the above-described first positive electrode active material AM1 and the above-described first aggregate GAG1, and may further include the binder BND and/or the conductive material CDM.

Referring to FIG. 16, the aggregate GAG1 and/or the aggregate GAG2 in the positive electrode active material layer AML1 according to FIG. 11 may each primarily exist inside the positive electrode active material layer AML1. The aggregate GAG1 and/or the aggregate GAG2 may each be uniformly (e.g., substantially uniformly) distributed inside the positive electrode active material layer AML1. The distribution of the aggregate GAG1 and/or the aggregate GAG2 in the positive electrode active material layer AML1 may each be more gradual in the third direction D3 of the positive electrode active material layer AML1.

For example, in one or more embodiments, an amount of carbon (C_{AML12}) in the first positive electrode active material layer AML12 and an amount of carbon (C_{AML14}) of the second positive electrode active material layer AML14 may be substantially the same. For example, a difference (ΔC_{cb}) between the minimum amount of carbon in the first positive electrode active material layer AML12 and the maximum amount of carbon in the second positive electrode active material layer AML14 may be very small, and smaller than ΔC_{cb} in FIG. 10.

The positive electrode active material layer AML1 according to one or more embodiments of the present disclosure may be substantially free of the bulk.

Thus, the positive electrode active material layer AML1 including the first positive electrode active material layer AML12 and the second positive electrode active material layers AML14 of the present disclosure may provide the positive electrode 10 having lower resistance.

### Method for Manufacturing Positive Electrode

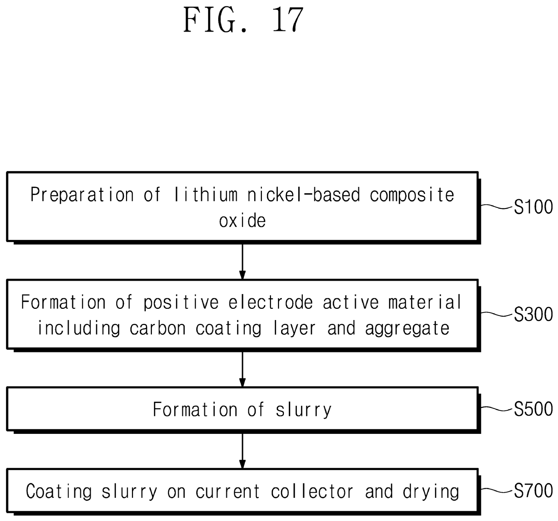

FIG. 17 is a flowchart for describing a method for manufacturing a positive electrode according to one or more embodiments of the present disclosure. FIGS. 18 to 21 are schematic diagrams for describing each step (e.g., act or task) of the manufacturing method according to one or more embodiments.

Referring to FIG. 17, a method for manufacturing a positive electrode according to one or more embodiments of the present disclosure includes: optionally preparing a lithium nickel-based composite oxide (S100); forming a positive electrode active material including a carbon coating layer and an aggregate, optionally by mixing the lithium nickel-based composite oxide and reduced graphene oxide particles in a dry process, (S300); forming a slurry including the positive electrode active material, the aggregate, a conductive material, a binder, and a solvent (S500): and coating the slurry on a current collector, and drying, (and optionally rolling) (S700).

The positive electrode active material AM may include a lithium nickel-based composite oxide, and may include at least one of a large particle or a small particle (S100). For example, the lithium nickel-based composite oxide may be formed by a manufacturing method including: forming a nickel-based hydroxide mixing the nickel-based hydroxide and a lithium raw material; and performing a heat treatment. A manufacturing method according to one or more embodiments may be as follows.

The nickel-based hydroxide may include a transition metal. The transition metal may include nickel (Ni), and may further include M¹ and M² of Chemical Formula 1 as described above. For example, in one or more embodiments, the nickel-based hydroxide may include nickel (Ni) and cobalt (Co) as transition metals. For example, in one or more embodiments, the nickel-based hydroxides may include nickel (Ni), cobalt (Co), as transition metals, and aluminium (Al). In one or more embodiments, the nickel-based hydroxide may include nickel (Ni), cobalt (Co), and manganese (Mn) as transition metals.

The nickel-based hydroxide may be obtained by a coprecipitation method. For example, the coprecipitation method may include dissolving a transition metal raw material in a solvent such as distilled water, and continuously introducing a transition metal salt solution together with a chelating agent and/or a basic aqueous solution into a reactor to cause precipitation. After the precipitate is collected in the form of a slurry, the slurry solution may be filtered and dried to obtain a nickel-based hydroxide.

The transition metal raw material may include a salt of the transition metal described above. The salt of the transition metal may be a sulfate, a nitrate, an acetate, a halide, a hydroxide, and/or the like, and is not particularly limited as long as it may be dissolved in a solvent. For example, in one or more embodiments, the transition metal raw material may include a nickel salt, a cobalt salt, and an aluminium salt. In one or more embodiments, the transition metal raw material may include a nickel salt, a cobalt salt, and a manganese salt. The transition metal raw material may be mixed by adjusting a molar ratio so that the positive electrode active material has high-capacity characteristics.

The nickel-based hydroxide may be mixed with the lithium raw material at a certain ratio. For example, in one or more embodiments, the nickel-based hydroxide and the lithium raw material may be mixed in a molar ratio of about 1:1. The lithium raw material is not particularly limited as long as it is a material commonly used in the manufacturing of a positive electrode active material. For example, the lithium raw material may include a lithium salt such as lithium carbonate, lithium nitrate, lithium hydroxide, or lithium sulfate.

A mixture of a nickel-based hydroxide and a lithium raw material may be heat-treated by putting it into a furnace. The heat treatment temperature may be about 700°C to about 1,000°C. The heat treatment may be performed in an oxidizing atmosphere such as air and/or oxygen. The heat treatment time may be about 10 hours to about 30 hours. For example, in one or more embodiments, preliminary calcination may be further performed at about 150°C to about 800°C before the heat treatment.

In one or more embodiments, a grinding process may be further performed after the heat treatment. Through the grinding process, a lithium nickel-based composite oxide having a desired or suitable average particle diameter may be obtained.

Referring to FIG. 18, a positive electrode active material AM and an aggregate GAG may be formed by mixing lithium nickel-based composite oxide LNC and graphene in a mixer MXR through a dry process (S300). As graphene, in one or more embodiments, reduced graphene oxide particles RGO may be used. Through this step (e.g., act or task), graphene may be coated on the surface of lithium nickel-based composite oxide LNC. Thereby, a carbon coating layer may be formed on the surface of the lithium nickel-based composite oxide LNC.

The lithium nickel-based composite oxide LNC may be formed through the manufacturing method of the aforementioned S100 in one or more embodiments.

Graphene, as an example, may be provided by reducing graphene oxide. When graphene oxide is reduced, reduced graphene oxide particles RGO may be obtained. The reduced graphene oxide particles RGO may include a single layer of graphene sheet or a plurality of graphene sheets. The reduced graphene oxide particles RGO may be an aggregate of graphene.

The reduced graphene oxide particles RGO may vary in their form depending on the reduction conditions. For example, the form of the reduced graphene oxide particles RGO may be at least one of a flake form or a cabbage-like form.

The reduced graphene oxide particles RGO in the form of flakes may have a relatively flat surface. For example, reduced graphene oxide particles RGO in the form of flakes may be relatively flat in form. For example, reduced graphene oxide particles RGO in the form of flakes may be in the form of a rugby ball. For example, reduced graphene oxide particles RGO in the form of flakes may have a structure in which one of its three dimensions is smaller than the other two. For example, reduced graphene oxide particles RGO in the form of flakes may have a structure composed of a plurality of graphene sheets, either in a single layer or in several layers.

For example, in one or more embodiments, a major axis of the reduced graphene oxide particles RGO in the form of flakes may be about 1 µm to about 40 µm. For example, the major axis of the reduced graphene oxide particles RGO in the form of flakes may be about 1 µm or more, about 2 µm or more, about 3 µm or more, about 4 µm or more, or about 5 µm or more. For example, the major axis of the reduced graphene oxide particles RGO in the form of flakes may be about 40 µm or less, about 35 µm or less, or about 30 µm or less.

For example, the major axis may be calculated by averaging values measured by arbitrarily selecting about 30 reduced graphene oxide particles RGO in an electron micrograph image of the reduced graphene oxide particles.

For example, a ratio of the minor axis to the major axis of the reduced graphene oxide particles RGO in the form of flakes may be about 0.1 to about 0.6. For example, the ratio of the minor axis to the major axis of the reduced graphene oxide particles RGO in the form of flakes may be about 0.2 to about 0.5, or about 0.3 to about 0.4.

For example, in one or more embodiments, reduced graphene oxide particles RGO in the form of flakes may be formed by reducing graphene oxide under relatively mild conditions. For example, reduced graphene oxide particles RGO in the form of flakes may be formed by reducing graphene oxide at substantially uniform pH conditions in a range of about pH 7 to about pH 10 with the addition of an appropriate or suitable amount of reducing agent. For example, in one or more embodiments, reduced graphene oxide particles RGO in the form of flakes may be formed by reducing graphene oxide at substantially uniform high temperature conditions in a range of about 600°C to about 1000°C. For example, in one or more embodiments, reduced graphene oxide particles RGO in the form of flakes may be formed by reduction of graphene oxide followed by slow drying at low temperatures.

The reduced graphene oxide particles in the cabbage-like form may be, for example, spherical or elliptical. The cabbage-like form may be, for example, a 'wrinkled' form or a 'crumpled' form. The reduced graphene oxide particles in the cabbage-like form may be, for example, a form in which a plurality of graphene sheets is layered or irregularly stacked. The cabbage-like form may be a multi-layered form.

For example, in one or more embodiments, a major axis of the reduced graphene oxide particles RGO in the form of cabbage-like structures may be about 1 µm to about 40 µm. For example, the major axis of the reduced graphene oxide particles RGO in the form of cabbage-like structures may be about 1 µm or more, about 2 µm or more, about 3 µm or more, about 4 µm or more, or about 5 µm or more. For example, the major axis of the reduced graphene oxide particles RGO in the form of cabbage-like structures may be about 40 µm or less, about 35 µm or less, or about 30 µm or less.

For example, the major axis may be calculated by averaging values measured by arbitrarily selecting about 30 reduced graphene oxide particles RGO in an electron micrograph image of the reduced graphene oxide particles.

For example, a ratio of the minor axis to the major axis of the reduced graphene oxide particles RGO in the form of cabbage-like structures may be about 0.7 to about 1.0. For example, the ratio of the minor axis to the major axis of the reduced graphene oxide particles RGO in the form of cabbage-like structures may be about 0.8 to about 0.9.

For example, in one or more embodiments, reduced graphene oxide particles RGO in the form of cabbage-like structures may be formed by reducing graphene oxide under relatively harsh conditions. For example, reduced graphene oxide particles RGO in the form of cabbage-like structures may be formed by adjusting the concentration of the reducing agent or inducing incomplete reduction using methods such as adding a small amount of reducing agent or slightly including an oxidizing agent. For example, in one or more embodiments, reduced graphene oxide particles RGO in the form of cabbage-like structures may be formed by rapidly heat-treating at high temperatures in a range of about 600°C to about 1000°C, or by controlling the rate of temperature increase.

For example, reduced graphene oxide particles RGO in the form of cabbage-like structures may be formed in the following manner. A dispersion of graphene oxide may be sprayed with an ultrasonic atomizer to form aerosol droplets, and the aerosol droplets may be passed through a tube furnace preheated to about 800°C via a carrier gas. The rapid evaporation may cause shrinkage of the aerosol droplets, and the graphene oxide may be first concentrated and then compressed, so that reduced graphene oxide particles RGO in the form of cabbage-like structures may be formed.

The lithium nickel-based composite oxide LNC and the reduced graphene oxide particles RGO may be mixed in a weight ratio of about 99:1 to about 99.99:0.01. For example, in one or more embodiments, the lithium nickel-based composite oxide LNC and the reduced graphene oxide particles RGO may be mixed in a weight ratio of about 99:1 to about 99.9:0.1, about 99.5:0.5 to about 99.9:0.1, or about 99.6:0.4 to about 99.8:0.2. When the weight ratio of the lithium nickel-based composite oxide LNC and the reduced graphene oxide particles RGO satisfies the range described above, the positive electrode active material AM may have excellent or suitable conductivity.

The dry coating may be one in which a solvent is omitted (e.g., not provided) during the coating process. With dry coating, the coating process may be simplified, and coating may be performed more easily. In addition, if (e.g., when) the dry coating is used, the thickness of the carbon coating layer CTL and CTL' may be easily adjusted.

For example, in one or more embodiments, the dry coating may be performed at a rotational speed of about 1000 rpm to about 5000 rpm. For example, the dry coating may be performed at a rotational speed of about 2000 rpm to about 4000 rpm.

For example, in one or more embodiments, the dry coating may be carried out for about 2 to about 30 minutes. For example, the dry coating may be carried out for about 5 to about 20 minutes.

When the rotation speed and the mixing time in the dry coating satisfy the above-described ranges, the positive electrode active material AM including the above-described carbon coating layer and the aggregate GAG may be formed. The carbon coating layer may be formed on at least a part of the surface of the lithium nickel-based composite oxide LNC. The aggregates GAG may be formed when reduced graphene oxide particles RGO break or aggregate with one another.

The carbon coating layer may be formed from reduced graphene oxide particles RGO. For example, when the reduced graphene oxide particles RGO in the form of flakes are used, a larger amount of the carbon coating layers CTL and CTL' may be formed than when the reduced graphene oxide particles RGO in the form of cabbage-like structures are used. For example, the reduced graphene oxide particles RGO in the form of flakes may have a larger surface capable of reacting with lithium nickel-based composite oxide LNC than the reduced graphene oxide particles RGO in the form of cabbage-like structures. The reduced graphene oxide particles RGO in the form of flakes having a thin and flat morphology may have a larger surface capable of reacting with lithium nickel-based composite oxide LNC than the reduced graphene oxide particles RGO in the form of cabbage-like structures having a multi-layered and rounded morphology.

For example, when the same amount of the reduced graphene oxide particles RGO is added and mixed, the reduced graphene oxide particles RGO in the form of flakes may form a carbon coating layer more than the aggregate GAG. For example, when the same amount of the reduced graphene oxide particles RGO is added and mixed, the reduced graphene oxide particles RGO in the form of cabbage-like structures may form the aggregate GAG more than the carbon coating layer CTL and CTL'.

Because a part of the reduced graphene oxide particles RGO forms the aggregate GAG, the aggregate GAG may be contained in a small amount.

For example, in one or more embodiments, the reduced graphene oxide particles RGO in the form of flakes may form the aggregates GAG fewer times than the reduced graphene oxide particles RGO in the form of cabbage-like structures.

Because the reduced graphene oxide particles RGO break or aggregate with each other to form the aggregate GAG, the particle diameter of the aggregate GAG may vary. For example, the particle diameter of the aggregate GAG may be about 40 µm or less. For example, the particle diameter of the aggregate GAG may be about 1 µm to about 40 µm, or about 1 µm to about 30 µm. For example, the particle diameter may be a value measured by selecting and measuring about 30 aggregates GAGs in an electron micrograph image of the aggregate GAG.

For example, in one or more embodiments, the aggregate GAG may be formed from the reduced graphene oxide particles RGO, and thus may include some oxidized portions, as described above. The reduced graphene oxide constituting the aggregate GAG may include a small amount of oxygen. Defects may be present in the reduced graphene oxide constituting the aggregate GAG.

The graphene constituting the aggregate GAG may be in the form of a sheet. For example, in one or more embodiments, the lateral size of the graphene constituting the aggregate GAG may be about 0.1 µm to about 1000 µm. For example, the lateral size of the graphene constituting the aggregate GAG may be about 0.1 µm to about 500 µm, about 0.1 µm to about 200 µm, about 0.1 µm to about 100 µm, about 0.1 µm to about 50 µm, about 0.1 µm to about 10 µm, about 0.1 µm to about 5 µm, or about 0.1 µm to about 3 µm.

For example, a thickness of graphene may be less than or equal to about 1 nm. For example, the thickness of the graphene may be about 0.1 nm to about 0.5 nm. The thickness of the graphene may refer to a distance in the thickness direction of graphene sheet.

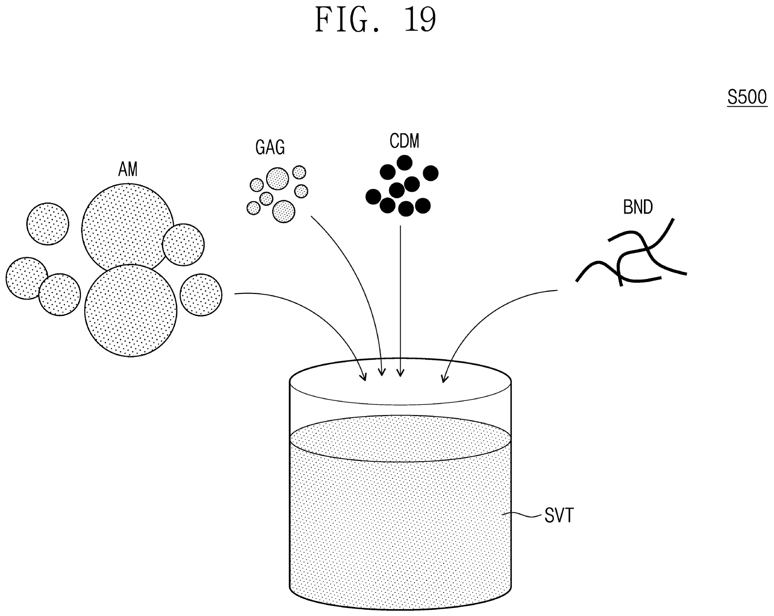

Referring to FIG. 19, the positive electrode active material AM, the aggregates GAG, the conductive material CDM, and the binder BND may be dissolved or dispersed in a solvent SVT to form a slurry (S500). The conductive material CDM and the binder BND may be the same as those described above with reference to FIGS. 1 to 7.

The solvent may be a solvent commonly used in the art, and may include, for example, at least one of dimethyl sulfoxide (DMSO), isopropyl alcohol, N-methylpyrrolidone (NMP), acetone, water, and/or a combination thereof.

A weight ratio of the conductive material CDM to the positive electrode active material AM may be about 0.7/99.5 to about 0.7/97. For example, in one or more embodiments, the weight ratio of the conductive material CDM to the positive electrode active material AM may be about 0.7/99.5 or more, about 0.7/99 or more, about 0.7 /98.5 or more, or about 0.7/98 or more. For example, the weight ratio of the conductive material CDM to the positive electrode active material AM may be about 0.7/97 or less, or about 0.7/97.5 or less.

Because the positive electrode 10 includes the positive electrode active material AM, the amount of the conductive material CDM in the electrode plate may be reduced, thereby securing additional space within the electrode plate having the same mixture density. Accordingly, the positive electrode active material AM may be prevented or reduced from cracking during the electrode plate rolling, and a rechargeable lithium battery having an excellent or suitable lifetime may be provided as described later.

A positive electrode may be formed by coating the above-described slurry on a current collector, followed by drying and, optionally, rolling (S700).

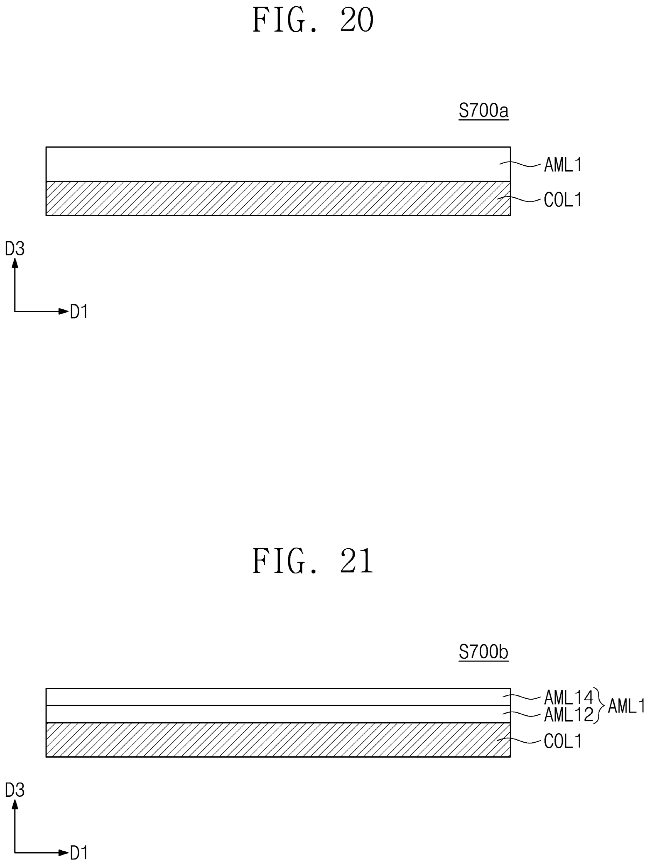

For example, referring to FIG. 20 (S700a), the slurry (intended to form the positive electrode active material layer AML1) may be applied on the current collector COL1 to have a mixture density of about 3 g/cc to about 4 g/cc and a loading level of about 20 g/cm² to about 30 g/cm². Thus, the positive electrode 10 according to FIG. 6 may be formed.

For example, due to the evaporation of the solvent (SVT) in the drying process, some of the aggregates GAGs may move, and part of the moved aggregates GAGs may distribute in an upper layer portion in the positive electrode active material layer AML1. For example, due to the evaporation of the solvent (SVT) in the drying process, part of the conductive material and/or the binder may move, and be mainly distributed in the upper layer portion in the positive electrode active material layer AML1.

The rolling may be performed with a rolling machine. The rolling may be performed to achieve a desired or suitable thickness of the positive electrode active material layer AML1. For example, in one or more embodiments, the rolling may be performed to achieve the thickness of the positive electrode active material layer AML1 of about 20 µm to about 100 µm. For example, the rolling may be performed to achieve the thickness of the positive electrode active material layer AML1 of about 20 µm or more, about 30 µm or more, about 40 µm or more, or about 50 µm or more. For example, the rolling may be performed to achieve the thickness of the positive electrode active material layer AML1 of about 100 µm or less, about 90 µm or less or about 80 µm or less, or about 70 µm or less.

Because the positive electrode active material layer AML1 includes a small amount of the aggregate GAG, the positive electrode active material layer AML1 may not substantially include the above-described bulk, or may include a relatively small bulk even if included.

According to one or more embodiments, referring to FIG. 21 (S700b), a first slurry (intended to form the first positive electrode active material layer AML12) may be firstly coated and dried on the current collector COL1 to have a loading level of about 10 g/cm² to about 15 g/cm², and then a second slurry (intended to form the second positive electrode active material layer AML14) may be secondly coated and dried to have the loading level of about 10 g/cm² to about 15 g/cm². The mixture density may be loaded to be about 3 g/cc and about 4 g/cc. Thus, the positive electrode 10 including the first positive electrode active material layer AML12 and the second positive electrode active material layer AML14 according to FIG. 11 may be formed.

The first slurry includes the first positive electrode active material including the first carbon coating layer, and the first aggregate. The first carbon coating layer and the first aggregate may be formed from the first reduced graphene oxide particles. The first reduced graphene oxide particles may be in the form of flakes or cabbage-like structures.

The second slurry includes the second positive electrode active material including the second carbon coating layer, and the second aggregate. The second carbon coating layer and the second aggregate may be formed from the second reduced graphene oxide particles. The second reduced graphene oxide particles may be in the form of flakes or cabbage-like structures.

By forming the positive electrode active material layer AML1 of FIG. 21, which includes two layers, having the same thickness as the positive electrode active material layer AML1 of FIG. 20, the amount of the aggregate GAG1 or the aggregate GAG2 distributed in the upper layer portion (i.e., the second positive electrode active material layer AML14) in the positive electrode active material layer AML1 according to FIG. 21 may be smaller than the amount of the aggregate GAG distributed in the upper layer portion in the positive electrode active material layer AML1 according to FIG. 20, even if the solvent SVT evaporates in the drying process. The aggregates GAG1 or GAG2 may be relatively uniformly (e.g., substantially uniformly) distributed inside the positive electrode active material layer AML1. The positive electrode active material layer AML1 may be substantially free of the bulk.

Hereinafter, the present disclosure will be described in more detail with reference to Examples. However, these examples are intended to illustrate the present disclosure, and the scope of the present disclosure is not limited to these examples.

### Preparation Example 1: Preparation of First Positive Electrode Active Material (AM1) and Aggregate (GAG1)

A lithium nickel-based composite oxide (LiNi_{0.91}Co_{0.075}Al_{0.015}O₂) containing a large particle having an average particle diameter of 12 µm and a small particle having an average particle diameter of 4 µm was prepared.

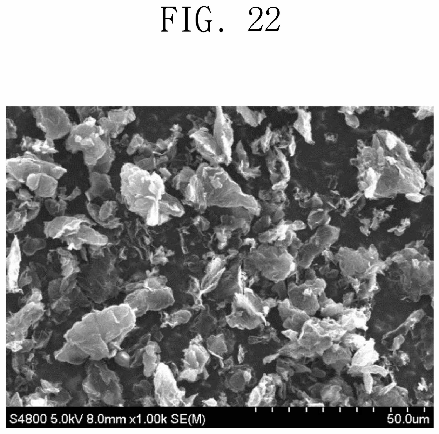

Graphene oxide was reduced to prepare reduced graphene oxide particles RGO, predominately in the flake form (the lateral size of graphene = 0.1 µm to 1000 µm). A Scanning Electron Microscope (SEM) image of the reduced graphene oxide particles RGO in the form of flakes is shown in FIG. 22. As shown in FIG. 22, the reduced graphene oxide particles RGO in the form of flakes are 'pieces' of graphene that have predominantly a thin and flat morphology. In a Scanning Electron Microscope (SEM) image of the reduced graphene oxide particles RGO in the form of flakes, 30 reduced graphene oxide particles in the form of flakes were arbitrarily selected, and the major axis and the minor axis were measured. As a result, the major axis was 5 to 30 µm on average, and the ratio of the minor axis to the major axis was 0.33 on average.

The lithium nickel-based composite oxide and the reduced graphene oxide particles RGO in the form of flakes were put into a mixer (NOBILTA (Hosokawa Micron Corporation)) at a weight ratio of 99.7:0.3, and mixed at 3000 rpm for 10 minutes to form a first positive electrode active material AM1 on which carbon coating layers CTL and CTL' were formed, and an aggregate GAG1. Mixing was performed under the above conditions to form carbon coating layers CTL and CTL' on at least a part of the surface of the lithium nickel-based composite oxide. Further, the reduced graphene oxide particles RGO were cracked or aggregated (e.g., agglomerated) with each other to form an aggregate GAG1.

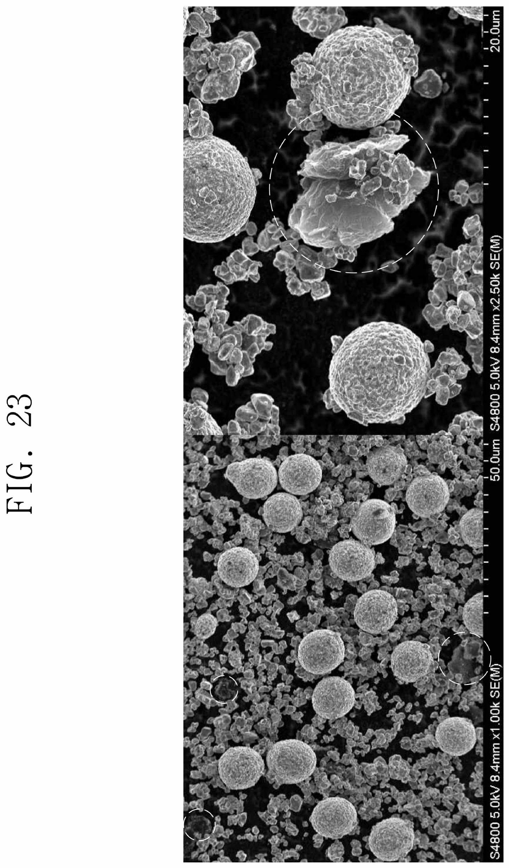

Scanning electron microscope (SEM) images of the first positive electrode active material AM1 and the aggregate GAG1 are shown in FIG. 23. White circles having a dotted line outline indicate relatively large aggregates GAG1. As a result of arbitrarily selecting about 30 aggregates GAG1 in the Scanning Electron Microscope (SEM) image and measuring the particle diameter, the particle diameter of the aggregates GAG1 was 1 µm to 30 µm. The first positive electrode active material AM1 included carbon coating layers CTL and CTL', and had a thickness of 5 nm.

### Preparation Example 2: Preparation of Second Positive Electrode Active Material (AM2) and Aggregate (GAG2)

A lithium nickel-based composite oxide (LiNi_{0.91}Co_{0.075}Al_{0.015}O₂) containing a large particle having an average particle diameter of 12 µm and a small particle having an average particle diameter of 4 µm was prepared.

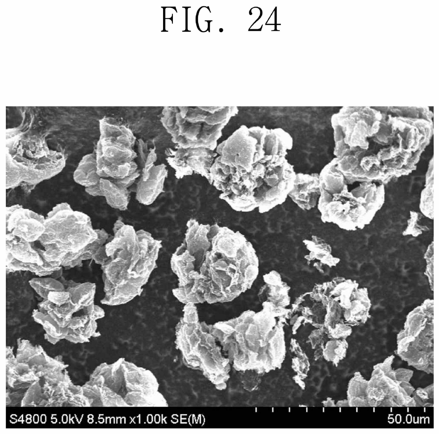

Graphene oxide was reduced to prepare reduced graphene oxide particles RGO predominately in the cabbage-like form (i.e., in the form of cabbage-like structures) (the lateral size of graphene = 0.1 µm to 1000 µm). A Scanning Electron Microscopy (SEM) image of the reduced graphene oxide particles RGO predominately in the form of cabbage-like structures is shown in FIG. 24. The reduced graphene oxide particles RGO in the form of cabbage-like structures are 'lumps' of graphene that is a multi-layered form and have a predominantly rounded morphology. In a Scanning Electron Microscope (SEM) image of the reduced graphene oxide particles RGO in the form of cabbage-like structures, about 30 reduced graphene oxide particles in the form of cabbage-like structures were arbitrarily selected, and the major axis and the minor axis were measured. As a result, on average, the major axis was 5 to 30 µm, and the ratio of the minor axis to the major axis was 0.83.

The lithium nickel-based composite oxide and the reduced graphene oxide particles RGO in the form of cabbage-like structures were put into a mixer (NOBILTA (Hosokawa Micron Corporation)) at a weight ratio of 99.7:0.3, and mixed at 3000 rpm for 10 minutes to form a second positive electrode active material AM2 on which carbon coating layers CTL and CTL' were formed, and an aggregate GAG2. Mixing was performed under the above conditions to form carbon coating layers CTL and, CTL' on at least a part of the surface of the lithium nickel-based composite oxide. Further, the reduced graphene oxide particles RGO were cracked or aggregated (e.g., agglomerated) with each other to form the aggregate GAG2.

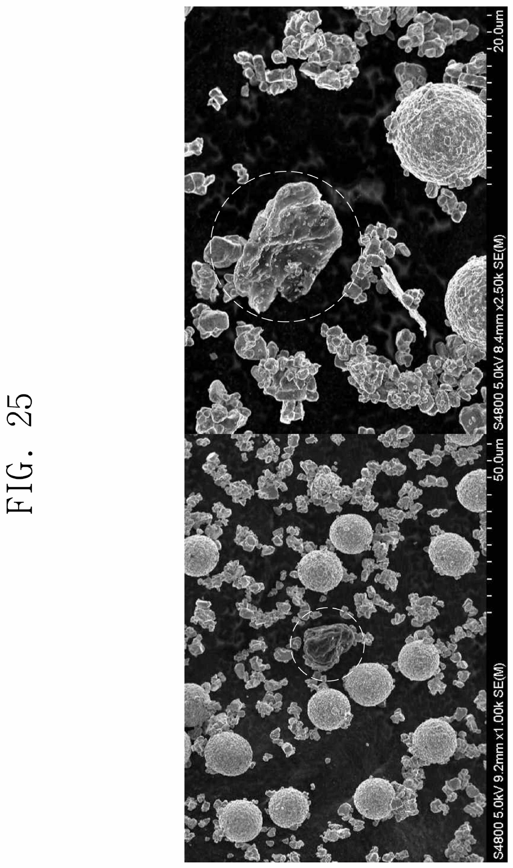

Scanning Electron Microscope (SEM) images of the second positive electrode active material AM2 and the aggregate GAG2 are shown in FIG. 25. White circles having a dotted line outline indicate relatively large aggregates GAG2. As a result of arbitrarily selecting about 30 aggregates GAG2 in the Scanning Electron Microscope (SEM) image and measuring the particle diameter, the particle diameter of the aggregates GAG2 was 1 µm to 30 µm. The second positive electrode active material AM2 included carbon coating layers CTL and CTL', and had a thickness of 5 nm.

### Example 1

98.4 wt% of the first positive electrode active material AM1 and the aggregate GAG1, 0.7 wt% of a conductive material (carbon nanotubes), and 0.9 wt% of a binder (polyvinylidene fluoride) were mixed in an N-methylpyrrolidone solvent to prepare a first slurry.

The first slurry was coated on an aluminium current collector, dried, and rolled to manufacture a positive electrode. The first slurry was coated on the current collector to have a mixture density of 3.9 g/cc and a loading level of 20 g/cm². The rolling was performed using a rolling machine so that the total thickness of the current collector and the positive electrode active material layer AML1 was 63.3 µm.

### Example 2

98.4 wt% of the second positive electrode active material AM2 and the aggregate GAG2, 0.7 wt% of a conductive material (carbon nanotubes), and 0.9 wt% of a binder (polyvinylidene fluoride) were mixed in an N-methylpyrrolidone solvent to prepare a second slurry.

A positive electrode was prepared in substantially the same manner as in Example 1, except that the second slurry was coated to the aluminium current collector.

### Example 3

98.4 wt% of the first positive electrode active material AM1 and the aggregate GAG1, 0.7 wt% of a conductive material (carbon nanotubes), and 0.9 wt% of a binder (polyvinylidene fluoride) were mixed in an N-methylpyrrolidone solvent to prepare a first slurry.

The first slurry was coated on an aluminium current collector to have a loading level of 10 g/cm² and dried for the first time, and then the first slurry was coated again to have a loading level of 10 g/cm² and dried for the second time, followed by rolling to manufacture a positive electrode. The rolling was performed using a rolling machine so that the total thickness of the current collector and the positive electrode active material layer AML1 was 63.3 µm. The mixture density was 3.9 g/cc.

### Example 4

98.4 wt% of the first positive electrode active material AM1 and the aggregate GAG1, 0.7 wt% of a conductive material (carbon nanotubes), and 0.9 wt% of a binder (polyvinylidene fluoride) were mixed in an N-methylpyrrolidone solvent to prepare a first slurry.

98.4 wt% of the second positive electrode active material AM2 and the aggregate GAG2, 0.7 wt% of a conductive material (carbon nanotubes), and 0.9 wt% of a binder (polyvinylidene fluoride) were mixed in an N-methylpyrrolidone solvent to prepare a second slurry.

A positive electrode was prepared in substantially the same manner as in Example 3, except that the first slurry was coated on an aluminium current collector to have a loading level of 10 g/cm² and dried for the first time, and then the second slurry was coated thereon to have a loading level of 10 g/cm² and dried for the second time.

### Example 5

98.4 wt% of the first positive electrode active material AM1 and the aggregate GAG1, 0.7 wt% of a conductive material (carbon nanotubes), and 0.9 wt% of a binder (polyvinylidene fluoride) were mixed in an N-methylpyrrolidone solvent to prepare a first slurry.

98.4 wt% of the second positive electrode active material AM2 and the aggregate GAG2, 0.7 wt% of a conductive material (carbon nanotubes), and 0.9 wt% of a binder (polyvinylidene fluoride) were mixed in an N-methylpyrrolidone solvent to prepare a second slurry.

A positive electrode was prepared in substantially the same manner as in Example 3, except that the second slurry was coated on an aluminium current collector to have a loading level of 10 g/cm² and dried for the first time, and then the first slurry was coated thereon to have a loading level of 10 g/cm² and dried for the second time

### Example 6

98.4 wt% of the second positive electrode active material AM2 and the aggregate GAG2, 0.7 wt% of a conductive material (carbon nanotubes), and 0.9 wt% of a binder (polyvinylidene fluoride) were mixed in an N-methylpyrrolidone solvent to prepare a second slurry.

A positive electrode was prepared in substantially the same manner as in Example 3, except that the second slurry was coated on an aluminium current collector to have a loading level of 10 g/cm² and dried for the first time, and then the second slurry was coated again to have a loading level of 10 g/cm² and dried for the second time.

### Comparative Example 1

A slurry was prepared by mixing 98.4 wt% of a positive electrode active material and reduced graphene oxide particles RGO in the form of flakes (a weight ratio of positive electrode active material: reduced graphene dioxide particles in the form of flakes = 99.7:0.3), 0.7 wt% of a conductive material (carbon nanotubes), and 0.9 wt% of a binder (polyvinylidene fluoride) in an N-methylpyrrolidone solvent. As the positive electrode active material, a lithium nickel-based composite oxide (LiNi_{0.91}Co_{0.075}Al_{0.015}O₂) containing a large particle having an average particle diameter of 12 µm and a small particle having an average particle diameter of 4 µm was prepared.

A positive electrode was prepared in substantially the same manner as in Example 1, except that the above-described slurry was coated on the aluminium current collector.

### Comparative Example 2

A slurry was prepared by mixing 98.4 wt% of a positive electrode active material and reduced graphene oxide particles RGO in the form of cabbage-like structures (a weight ratio of positive electrode active material : reduced graphene oxide particles in the form of cabbage-like structures = 99.7:0.3), 0.7 wt% of a conductive material (carbon nanotubes), and 0.9 wt% of a binder (polyvinylidene fluoride) in an N-methylpyrrolidone solvent. As the positive electrode active material, a lithium nickel-based composite oxide (LiNi_{0.91}Co_{0.075}Al_{0.015}O₂) containing a large particle having an average particle diameter of 12 µm and a small particle having an average particle diameter of 4 µm was prepared.

A positive electrode was prepared in substantially the same manner as in Example 1, except that the above-described slurry was coated on an aluminium current collector.

### Preparation of Rechargeable Lithium Battery

One of the above positive electrodes and a lithium metal as a counter electrode were used, and a polyethylene-polypropylene multilayer separator was interposed therebetween. As an electrolyte, a solution obtained by adding 1.0 M of LiPF₆ lithium salt to a solvent obtained by mixing ethylene carbonate (EC) and diethyl carbonate (DEC) at a volume ratio of 50:50 was used. The electrolyte was injected to prepare a coin half-cell.

**Table 1**

| Items | Structure of Positive Electrode Active Material Layer | Form of Reduced Graphene Oxide Particles RGO |
|---|---|---|
| Example 1 | Monolayer | Flake Form |
| Example 2 | Monolayer | Cabbage-Like Structural Form |
| Example 3 | Bilayer | First positive electrode active material layer: flake form |
| | | Second positive electrode active material layer: flake form |
| Example 4 | Bilayer | First positive electrode active material layer: flake form |
| | | Second positive electrode active material layer: cabbage-like structural form |
| Example 5 | Bilayer | First positive electrode active material layer: cabbage-like structural form |
| | | Second positive electrode active material layer: flake form |
| Example 6 | Bilayer | First positive electrode active material layer: cabbage-like structural form |
| | | Second positive electrode active material layer: cabbage-like structural form |
| Comparative Example 1 | Monolayer | Flake Form |
| Comparative Example 2 | Monolayer | Cabbage-like structural form |

### Evaluation Example 1: Cross-sectional Analysis of Positive Electrode

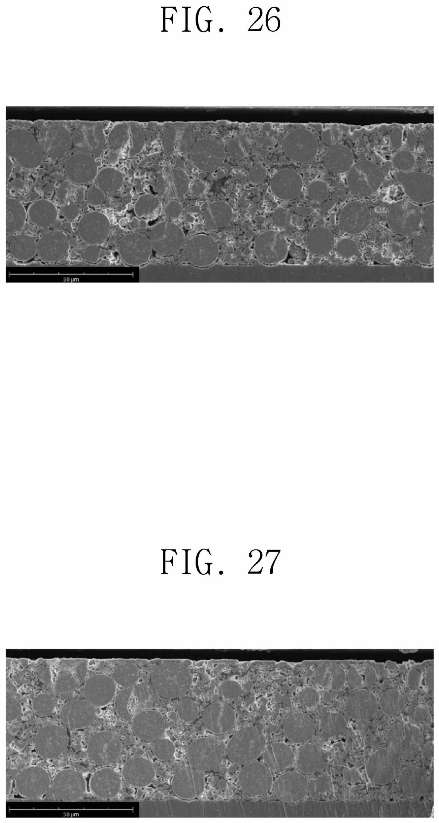

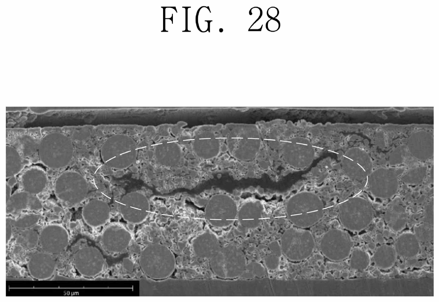

FIGS. 26 to 28 are scanning electron microscope (SEM) images of cross-sections of positive electrodes according to Example 1, Example 3, and Comparative Example 1, respectively. The white ellipse having a dotted line outline in FIG. 28 shows the bulk formed by the clumping of reduced graphene oxide particles.

Referring to FIGS. 26 to 28, it was confirmed that the positive electrode active material in the positive electrodes according to Example 1 and Example 3 included carbon coating layers, unlike the positive electrode active material in the positive electrode according to Comparative Example 1. In addition, it was confirmed that the positive electrode active material in the positive electrodes according to Example 1 and Example 3 were not cracked even after the rolling of the electrode plates, unlike the positive electrode active material in the positive electrode according to Comparative Example 1.

In addition, the bulk was observed in the positive electrode according to Comparative Example 1, and the size of the bulk was relatively large. In contrast, in the positive electrode according to Example 1, the observed bulk size was much smaller than in the positive electrode of Comparative Example 1. No bulk was observed in the positive electrode according to Example 3.

In addition, the positive electrode according to Example 3 was found to have less distribution of the aggregates in the upper layer portion of the positive electrode active material layer AML1 compared to the positive electrode according to Example 1. It was confirmed that the positive electrode according to Example 3 showed that the aggregates were relatively uniformly distributed inside the positive electrode active material layer AML1 compared to the positive electrode according to Example 1.

### Evaluation Example 2: Performance Evaluation of Positive Electrode

The mixture resistance of each of the positive electrodes according to Examples 1 to 6 and Comparative Examples 1 and 2 was evaluated.

The mixture resistance of each of the positive electrodes according to Examples and Comparative Examples was measured at 25°C using an electrode resistance measurement system (RM2610, manufactured by Hioki). In the electrode resistance measurement system, a probe was placed on a positive electrode such that a positive electrode active material layer faced the probe. A constant current was passed through the surface of the positive electrode active material, and the volume resistance of the positive electrode active material layer and the interface resistance between the positive electrode active material layer and the positive electrode current collector were measured from the surface potential distribution. The volume resistance of the positive electrode active material layer was regarded as the mixture resistance of the positive electrode active material layer.

The results are shown in Table 2.

**Table 2**

| Items | Mixture Resistance (Ω·cm) |
|---|---|
| Example 1 | 11.2 |
| Example 2 | 13.0 |
| Example 3 | 7.2 |
| Example 4 | 8.7 |
| Example 5 | 9.1 |
| Example 6 | 10.5 |
| Comparative Example 1 | 13.9 |
| Comparative Example 2 | 15.4 |

Referring to Table 2, the positive electrodes according to Examples 1 to 6 each had low mixture resistance as compared to the positive electrodes according to Comparative Examples 1 and 2.

For example, the positive electrodes according to Example 1 and Example 2 each had lower mixture resistance than the positive electrodes according the Comparative Examples 1 and 2. It was confirmed that the positive electrodes according to Example 1 and Example 2, which include the positive electrode active material containing the carbon coating layer and the aggregate and reduce the bulk, lower the resistances of the positive electrodes and improve the conductivity of the positive electrodes.

In addition, the positive electrodes according to Examples 3 to 6 each had lower mixture resistance than the positive electrodes according to Example 1 and Example 2. It was confirmed that the positive electrodes according to Examples 3 to 6, which include the positive electrode active material containing the carbon coating layer and the aggregate, include no bulk, and allow the aggregates to be uniformly (e.g., substantially uniformly) distributed inside the positive electrode active material layer, which further lowers the resistance of the positive electrode and increase the conductivity of the positive electrode. In the context of the present disclosure, "uniformly distributed" refers to the even and consistent dispersion of the aggregates (formed from reduced graphene oxide particles) throughout the positive electrode active material layer. This refer that the aggregates are spread out in a manner that avoids clustering or concentration in specific areas, ensuring that the electrical properties are consistent across the entire electrode. This uniform distribution helps in maintaining low resistance and high conductivity throughout the electrode, leading to better performance and efficiency of the rechargeable lithium battery.

The examples achieve the beneficial characteristics of low resistance and improved conductivity in the positive electrodes through several methods and processes. Firstly, the positive electrode active materials in Examples 1 to 6 include carbon coating layers, which enhance conductivity by providing a conductive pathway for electrons, thereby reducing overall resistance. Additionally, the incorporation of aggregates formed from reduced graphene oxide particles helps improve the structural integrity and conductivity of the electrode material. The uniform distribution of these aggregates, especially in bilayer structures, ensures consistent electrical properties throughout the electrode.

Moreover, Examples 1 and 2 show a reduction in bulk formation compared to Comparative Examples, which can lead to lower resistance and increased conductivity. By reducing or minimizing bulk formation, the electrodes maintain lower resistance and better performance. The enhanced mixing and coating processes in Examples 3 to 6 ensure that the aggregates are uniformly distributed, preventing localized areas of high resistance and promoting efficient electron flow across the electrode.

Cross-sectional analysis using scanning electron microscope (SEM) images confirms the presence of carbon coating layers and the uniform distribution of aggregates, showing that the electrodes in Examples 1 and 3 are not cracked after rolling, unlike the Comparative Examples, indicating better mechanical stability and lower resistance. Performance evaluation using an electrode resistance measurement system demonstrates that the mixture resistances of the positive electrodes in Examples 1 to 6 are lower than those in the Comparative Examples, validating the improved conductivity and lower resistance achieved through the methods used in the examples.

A positive electrode according to one or more embodiments of the present disclosure may have low resistance. This characteristic is for enhancing the overall performance and efficiency of rechargeable lithium batteries, as lower resistance translates to better conductivity and improved energy transfer during battery operation.

The method for manufacturing a positive electrode according to one or more embodiments of the present disclosure may manufacture a positive electrode having the above-described beneficial characteristics. By enhancing the distribution of aggregates and ensuring the presence of carbon coating layers, the method contributes to the development of high-performance rechargeable lithium batteries with superior electrical properties.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described with reference to example embodiments, it should be understood that these embodiments are provided for illustrative purposes only and do not limit the scope of the present disclosure. Various modifications and equivalent arrangements may be made without departing from the scope of the appended claims and equivalents thereof. Accordingly, the described embodiments should be regarded as examples rather than limitations of the present disclosure.

Embodiments are set out in the following clauses:
Clause 1. A positive electrode comprising: (a) a current collector; and (b) a positive electrode active material layer on the current collector, wherein the positive electrode active material layer comprises: (i) a positive electrode active material comprising a lithium nickel-based composite oxide and a carbon coating layer; (ii) an aggregate; (iii) a conductive material comprising a carbon-based material having a one-dimensional nanostructure; and (iv) a binder, wherein the carbon coating layer and the aggregate are each formed from graphene particles.
Clause 2. The positive electrode of Clause 1, wherein the graphene particles comprise at least one of graphene oxide, reduced graphene oxide, or a combination thereof.
Clause 3. The positive electrode of Clause 1 or Clause 2, wherein the graphene particles are in at least one of a flake form or a cabbage-like form.
Clause 4. The positive electrode of any preceding Clause, wherein the positive electrode active material layer comprises: a first positive electrode active material layer and a second positive electrode active material layer that are stacked sequentially, wherein (a) the first positive electrode active material layer comprises: a first carbon coating layer on a surface of the lithium nickel-based composite oxide, and a first aggregate; the first carbon coating layer and the first aggregate being formed from first graphene particles, and (b) the second positive electrode active material layer comprises: a second carbon coating layer on a surface of the lithium nickel-based composite oxide, and a second aggregate; the second carbon coating layer and the second aggregate being formed from second graphene particles, and wherein the first graphene particles and the second graphene particles are each independently in at least one of a flake form or a cabbage-like form.
Clause 5. The positive electrode of any preceding Clause, wherein the aggregate is substantially uniformly distributed inside the positive electrode active material layer

## Claims

1. A method for manufacturing a positive electrode, comprising:
forming a positive electrode active material comprising a carbon coating layer, and an aggregate;
forming a slurry comprising the positive electrode active material and the aggregate; and
coating the slurry on a current collector and drying to form a positive electrode active material layer,
wherein the carbon coating layer and the aggregate are formed from graphene particles,
wherein the graphene particles are in at least one of a flake form or a cabbage-like form.

2. The method as claimed in Claim 1, wherein the graphene particles comprise at least one of graphene oxide, reduced graphene oxide, or a combination thereof.

3. The method as claimed in Claim 1 or Claim 2, wherein the forming of the positive electrode active material comprising the carbon coating layer and the aggregate comprises:
mixing a lithium nickel-based composite oxide and the graphene particles in a dry process,
the mixing being performed utilizing a mixer at a rotational speed of about 1000 rpm to about 5000 rpm and for a time of about 2 minutes to about 30 minutes.

4. The method as claimed in Claim 3, wherein a weight ratio of the lithium nickel-based composite oxide to the graphene particles is about 99:1 to about 99.99:0.01.

5. The method as claimed in Claim 3, wherein the carbon coating layer is formed on at least a part of a surface of the lithium nickel-based composite oxide.

6. The method as claimed in any preceding Claim, wherein the flake form of the graphene particles has a ratio of minor axis to major axis of about 0.1 to about 0.6.

7. The method as claimed in any preceding Claim, wherein the cabbage-like form of the graphene particles has a ratio of minor axis to major axis of about 0.7 to about 1.0.

8. The method as claimed in any preceding Claim, wherein the aggregate has a particle size of about 1 µm to about 40 µm.

9. The method as claimed in any preceding Claim, wherein the forming of the positive electrode active material layer comprises:
coating the slurry on the current collector to have a mixture density of about 3 g/cc to about 4 g/cc and a loading level of about 20 g/cm² to about 30 g/cm².

10. The method as claimed in any preceding Claim, wherein the positive electrode active material is a first positive electrode active material, the carbon coating layer is a first carbon coating layer, the aggregate is a first aggregate, the slurry is a first slurry, and the graphene particles are first graphene particles, and wherein the method further comprises:
forming a second slurry comprising a second positive electrode active material comprising a second carbon coating layer, and a second aggregate; and
coating the second slurry on the first positive electrode active material layer dried on the current collector, and drying said second slurry to form a second positive electrode active material layer,
wherein the second carbon coating layer and the second aggregate are formed from second graphene particles.

11. The method as claimed in Claim 10, wherein each of the first graphene particles and the second graphene particles comprises at least one of graphene oxide, reduced graphene oxide, or a combination thereof.

12. The method as claimed in Claim 10 or Claim 11, wherein the first graphene particles are in a flake form, and the second graphene particles are in a flake form.

13. The method as claimed in Claim 10 or Claim 11, wherein the first graphene particles are in a flake form, and
the second graphene particles are in a cabbage-like form.

14. The method as claimed in Claim 10 or Claim 11, wherein the first graphene particles are in a cabbage-like form, and
the second graphene particles are in a flake form or a cabbage-like form.

15. The method as claimed in any one of Claims 10 to 14, wherein the forming of the first positive electrode active material layer comprises
coating the first slurry on the current collector to have a loading level of about 10 g/cm² to about 15 g/cm², and
wherein the forming of the second positive electrode active material layer comprises
coating the second slurry on the first positive electrode active material layer to have a loading level of about 10 g/cm² to about 15 g/cm².
